(19) Europäisches Patentamt
European Patent Office
Office européen des brevets

(11) EP 3 770 225 B1

(12) **EUROPEAN PATENT SPECIFICATION**

(45) Date of publication and mention of the grant of the patent:
**07.08.2024 Bulletin 2024/32**

(21) Application number: **19771151.8**

(22) Date of filing: **18.03.2019**

(51) International Patent Classification (IPC):
***C09D 133/06*** *(2006.01)* ***C09D 11/30*** *(2014.01)*
***B41J 2/01*** *(2006.01)* ***B41M 5/00*** *(2006.01)*
***C08F 220/18*** *(2006.01)* ***C09D 11/107*** *(2014.01)*
***C09D 11/322*** *(2014.01)* ***C09D 11/54*** *(2014.01)*

(52) Cooperative Patent Classification (CPC):
(C-Sets available)
**C09D 11/107; B41J 2/01; B41M 5/0017; C08F 220/1818; C09D 11/322; C09D 11/54; C09D 133/066;** B41M 5/0047; B41M 5/0064 (Cont.)

(86) International application number:
**PCT/JP2019/011141**

(87) International publication number:
**WO 2019/181840 (26.09.2019 Gazette 2019/39)**

(54) **AQUEOUS INK COMPOSITION, INK SET, AND IMAGE FORMING METHOD**

WÄSSRIGE TINTENZUSAMMENSETZUNG, TINTENSATZ UND BILDERZEUGUNGSVERFAHREN

COMPOSITION D'ENCRE AQUEUSE, ENSEMBLE ENCRE, ET PROCÉDÉ DE FORMATION D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2018 JP 2018057199**

(43) Date of publication of application:
**27.01.2021 Bulletin 2021/04**

(73) Proprietor: **FUJIFILM Corporation**
**Tokyo 106-8620 (JP)**

(72) Inventors:
- **KOBAYASHI, Shoichiro**
  **Ashigarakami-gun, Kanagawa 258-8577 (JP)**
- **SATO, Ayato**
  **Ashigarakami-gun, Kanagawa 258-8577 (JP)**

(74) Representative: **Klunker IP Patentanwälte PartG mbB**
**Destouchesstraße 68**
**80796 München (DE)**

(56) References cited:
**EP-A1- 2 216 373**
**WO-A1-2014/045970**
**JP-A- 2002 302 627**
**JP-A- 2002 356 602**
**JP-A- 2010 184 429**
**JP-A- 2010 215 853**
**US-A1- 2016 333 209**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08F 220/1818, C08F 220/14, C08F 220/20,
C08F 220/06

## Description

## BACKGROUND OF THE INVENTION

1. Field of the Invention

The present invention relates to an aqueous ink composition, an ink set, and an image-forming method.

2. Description of the Related Art

Regarding image recording methods of forming images on recording media such as paper based on image data signals, there are recording methods such as electrophotographic methods, sublimation-type and fusion-type thermal transfer methods, and inkjet methods.

In inkjet recording methods, since a printing plate is not needed, and image formation is directly performed on a recording medium by jetting ink only on image-forming sections, ink can be used efficiently, while the running costs are low. In regard to inkjet recording methods, the printing apparatuses are relatively less expensive compared to conventional printing machines, and the printing apparatuses can be miniaturized and less noisy. As such, inkjet recording methods have combinations of various advantages compared to other image recording systems.

In a case in which aqueous ink is applied to the inkjet recording methods, as the ink remaining at a jetting port is dried, an ink component remaining after drying is firmly adhered to the jetting port. The ink component firmly adhered to the jetting port then interferes with accurate jetting in a case of jetting the ink, or impedes jetting itself, which causes deterioration of jetting stability. Therefore, it is required that the aqueous ink used in the inkjet recording methods has properties (maintenance properties) that are difficult to completely dry at the jetting port, and can be easily eluted or dispersed in water and washed off even though the ink is firmly adhered. In order to ensure the maintenance properties, a constant amount of a high-boiling solvent is generally formulated to an aqueous medium of the aqueous ink to prevent the aqueous ink from firmly adhered to the jetting port.

On the other hand, regarding an image area formed by applying the aqueous ink to the inkjet recording methods, the image area is required to have mechanical strength (rub resistance) whereby an image is not scratched or peeled off in a case where external force is applied. Therefore, the ink component forming the image area is required to have a property of exhibiting constant firmly adhering force after drying.

Techniques for enhancing the properties required for such aqueous ink (maintenance properties and mechanical strength of the image area) have been reported. For example, it is described in JP2016-069583A that by applying a resin having a combination of constitutional units of a specific structure as a resin constituting the resin fine particle contained in an aqueous ink composition, good jetting stability can be given to the aqueous ink composition, and rub resistance of the formed image area is also enhanced.

Document US 2016/333209 A1 discloses an aqueous ink composition comprising fine polymer particles and an organic solvent. The solvent includes propylene glycol. The polymer particles include acrylamide constitutional units. The ink composition provides recording medium with reduced curling and effectively prevents stacker blocking.

## SUMMARY OF THE INVENTION

The inkjet recording methods have been mainly used in the fields of office printers and home printers. However, in recent years, the methods are used widely to the field of commercial printing, and the speed of inkjet recording has been increased. Regarding a recording medium, in addition to a permeable recording medium such as plain paper used in homes and offices, a low-permeable recording medium such as coat paper is also popular. Furthermore, as typified by the manufacture of a plastic film label and the like, an image has been formed on non-permeable recording media such as plastic, metal, and glass.

However, in a case of forming the image on the low-permeable or non-permeable recording medium, liquid droplets flying from a nozzle and landing on the recording medium hardly permeate into the recording medium, or do not permeate at all. Therefore, although the aqueous ink is required to have high drying properties, sufficient drying properties cannot be realized in a case in which the above-described high-boiling solvent is contained in the aqueous medium in a certain amount or more. Thus, there are restrictions on the realization of high-speed and high-precision image formation. On the other hand, in a case in which the high-boiling solvent is not used, there are problems that the aqueous ink is quickly dried at the jetting port and the like, and thus the maintenance properties are deteriorated.

Therefore, an object of the invention is to provide an aqueous ink composition which achieves a balance between contradictory properties such as maintenance properties and drying properties at a high level that has never been achieved, and which further has excellent mechanical strength in the formed image area, an ink set containing the aqueous ink composition, and an image-forming method using the aqueous ink composition.

The present inventors have conducted intensive studies in view of the above problems. As a result, the present inventors have found that in the aqueous ink composition containing the aqueous medium and the resin fine particles, even though the high-boiling solvent is not used in the aqueous medium (or the amount of the high-boiling solvent used is very small), the above problems can be solved by making the aqueous medium and the resin constituting the resin fine particle have a relationship exhibiting a certain affinity with each other (a specific relationship in which the affinity is neither too high nor too low).

The invention has been further studied based on these findings, and has been completed.

The above-described problems of the invention were solved by an aqueous ink composition comprising: at least an aqueous medium and resin fine particles, wherein a proportion of a water-soluble organic solvent occupied in the aqueous medium, which is a high-boiling solvent, which has a boiling point of 250°C or higher, is 3% by mass or less, and a boiling point of a water-soluble organic solvent other than the high-boiling solvent, which is included in the aqueous medium, is lower than 230°C, and a resin constituting the resin fine particle contains at least one kind of constitutional units represented by General Formula (1) or (2),

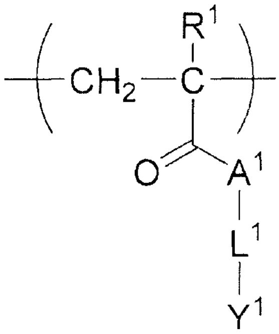
General Formula (1)

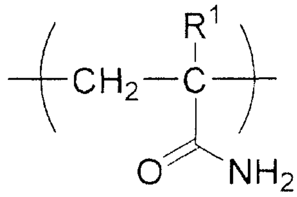
General Formula (2)

in the formulae, $R^1$ represents a hydrogen atom or an alkyl group having 1 to 4 carbon atoms,
$A^1$ represents -O-, -NH-, or -N($L^2$- $Y^2$)-,
$L^1$ represents an alkylene group, an alkenylene group, an alkynylene group, a group selected from -O-, -NH-, -N($L^2$-$Y^2$)-, and -C(=O)-, or a divalent group formed by combining two or more kinds of these groups,
$Y^1$ represents -OH, -$OR^2$, -$NH_2$, -$NR^2H$. -$NR^2R^3$. -SH, -$S(=O)_2OM$, or -$OP(=O)(OM)_2$, where. $R^2$ and $R^3$ each represent an alkyl group, an alkenyl group, or an alkynyl group, M represents a hydrogen atom, an alkali metal ion, or an ammonium ion,
$L^2$ represents an alkylene group, an alkenylene group, an alkynylene group, a group selected from -O-, -NH-, and -C(=O)-, or a divalent group formed by combining two or more kinds of these groups, and $Y^2$ has the same definition as $Y^1$, and at least one kind of constitutional units represented by any one of General Formulae (A) to (E),

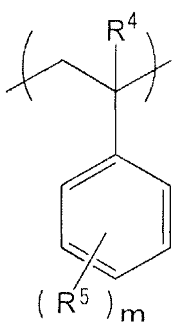
General Formula (A)

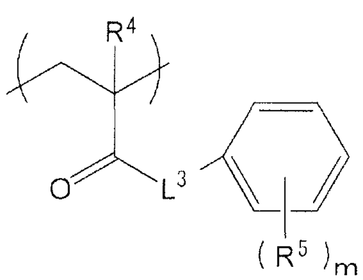
General Formula (B)

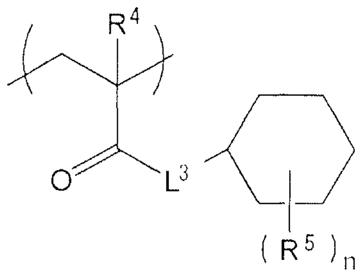
General Formula (C)

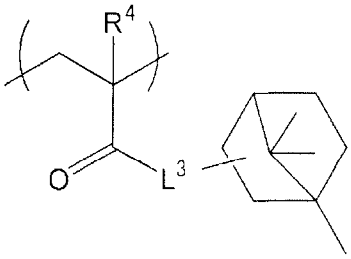

General Formula (D)

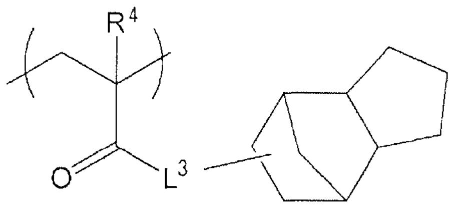

General Formula (E)

in the formulae, $R^4$ represents a hydrogen atom or methyl. $R^5$ represents an alkyl group, an alkenyl group, or an alkynyl group, m is an integer of 0 to 5. and n is an integer of 0 to 11, and $L^3$ represents a single bond, or an alkylene group having 1 to 18 carbon atoms, an arylene group having 6 to 18 carbon atoms, a group selected from -O-. -NH-, -S-, and -C(=O)-, or a divalent group formed by combining two or more kinds of these groups, and the water-soluble organic solvent having a boiling point of lower than 230°C includes: a single or a combination of two or more kinds of the group consisting of alkanediols, which are polyhydric alcohols, sugar alcohols, alkyl alcohols having 1 to 4 carbon atoms, and glycol ethers.

According to the present specification, unless particularly stated otherwise, in a case in which there is a plurality of substituents, linking groups, repeating units, or the like (hereinafter, referred to as substituents or the like), which are indicated by a specific reference symbol, or in a case in which a plurality of substituents or the like is simultaneously or alternatively prescribed, the respective substituents or the like may be identical with or different from each other. The same also applies to the prescription on the number of substituents or the like.

According to the present specification, the term "group" for each of the groups described as examples of each of substituents and linking groups is used to mean to include both an unsubstituted form and a form having a substituent. For example, the term "alkyl group" means an alkyl group which may have a substituent.

In the present specification, in a case in which the name of a chemical is called by putting the term "compound" at the foot of the chemical name, or in a case in which the chemical is shown by a specific name or a chemical formula, unless otherwise specified, the term "compound" is used to mean not only the compound itself, but also a salt, complex or ion thereof and the like. In addition, the term "compound" is also used to mean a compound in which a part of the structure is changed to the extent that a desired effect is not impaired.

In the invention, in a case in which the number of carbon atoms of a certain group is to be defined, this number of carbon atoms means the number of carbon atoms in the entire group. That is, in a case in which this group further has a substituent, the number of carbon atoms means the number of carbon atoms of the entirety including this substituent.

In the invention, in a case in which a certain group is capable of forming a noncyclic skeleton and a cyclic skeleton, unless particularly otherwise specified, the certain group includes both a group having a noncyclic skeleton and a group having a cyclic skeleton. For example, unless particularly otherwise specified, the scope of alkyl groups includes linear alkyl groups, branched alkyl groups, and cyclic (cyclo) alkyl groups. In a case in which a certain group forms a cyclic skeleton, the lower limit of carbon atoms in the group having a cyclic skeleton is preferably 3 or more and more preferably 5 or more regardless of the lower limit of carbon atoms which is specifically described for the group.

According to the present specification, the term "(meth)acrylate" is used to mean to include both acrylate and methacrylate. The same also applies to "(meth)acryiic acid".

A numerical value range represented using "to" in the present specification means a range including the numerical values described before and after "to" as the lower limit and the upper limit.

In the aqueous ink composition and the ink set according to an aspect of the invention, after the ink composition is applied onto the recording medium, the aqueous medium in the composition can be quickly dried. Therefore, even in a case in which the low-permeable or non-permeable recording medium is used as the recording medium, an image can be formed at high-speed and with high-precision. Furthermore, in a case in which the aqueous medium is applied to the firmly adhered components after drying, these components have a high affinity to the aqueous medium. Therefore, for example, even in a case in which the ink composition is dried in a state of being stuck to the ink jetting port and then firmly adhered thereto, the firmly adhered components can be washed away by the aqueous medium. That is, the aqueous ink composition and the ink set according to an aspect of the invention have excellent maintenance properties.

In addition, the aqueous ink composition and the ink set according to the aspect of the invention are also excellent in the mechanical strength of the image area formed using the same.

In the image-forming method according to an aspect of the invention, after the aqueous ink composition is applied onto the recording medium, the aqueous medium in the composition can be quickly dried. Therefore, even in a case in which the low-permeable or non-permeable recording medium is used as the recording medium, an image

formation can be performed at high-speed and with high-precision. In addition, in the image-forming method according to the aspect of the invention, even in a case in which the aqueous ink composition is, for example, dried in a state of being stuck to the ink jetting port and then firmly adhered thereto, the firmly adhered components can be washed away by the aqueous medium. That is, the image-forming method according to the aspect of the invention is a method excellent in maintenance properties.

Furthermore, in the image-forming method according to the aspect of the invention, it is possible to form the image area having excellent mechanical strength on the recording medium.

## DESCRIPTION OF THE PREFERRED EMBODIMENTS

Preferred embodiments of an aqueous ink composition, an ink set, and an image-forming method according to an embodiment of the invention will be described below.

[Aqueous ink composition]

The aqueous ink composition according to the embodiment of the invention contains at least an aqueous medium and resin fine particles having a specific structure. Furthermore, the aqueous ink composition of the embodiment of the invention usually includes a colorant. In a case in which the aqueous ink composition does not include a colorant, the aqueous ink composition can be used as a clear ink, and in a case in which the aqueous ink composition includes a colorant, the aqueous ink composition can be used for the applications of forming color images.

<Aqueous medium>

The aqueous medium used in the invention is configured to include at least water, and to include at least one water-soluble organic solvent as necessary. The content of the aqueous medium in the aqueous ink composition according to the embodiment of the invention is preferably 30% by mass or more, more preferably 50% by mass or more, and even more preferably 70% by mass or more. The content of the aqueous medium in the aqueous ink composition according to the embodiment of the invention is usually 98%) by mass or less, and more preferably 95% by mass or less.

Regarding the water used for the invention, it is preferable to use water that does not include ionic impurities, such as ion exchange water or distilled water. The proportion of water occupied in the aqueous medium constituting the aqueous ink composition is selected as appropriate according to the purpose, and is preferably 30% to 99% by mass, more preferably 40% to 95% by mass, even more preferably 50% to 95% by mass, and particularly preferably 60% to 90% by mass.

- Water-soluble organic solvent -

It is preferable that the aqueous medium according to the embodiment of the invention includes at least one water-soluble organic solvent. The water-soluble organic solvent having a solubility in water at 20°C of 5 g/100 g - $H_2O$ or more is preferred. By containing the water-soluble organic solvent, it is possible to suppress the aqueous ink composition from drying too much, and to prevent a nozzle from clogging to some extent in a case of being applied to an inkjet method. In addition, the permeability to a recording medium can be controlled by adding the water-soluble organic solvent.

In the invention, the water-soluble organic solvent does not have an aliphatic group (chain) having 8 or more carbon atoms in series. From this viewpoint, it is distinguished from a surfactant described later. That is, the term "surfactant" as used in the invention includes an aliphatic group (chain) having 8 or more carbon atoms in series in a molecule thereof.

In order to further enhance the above-described drying suppression effect, the aqueous ink composition generally contains a water-soluble organic solvent having a boiling point of 250°C or higher (hereinafter, also referred to as "high-boiling solvent") in a concentration of about 10% by mass or more. On the other hand, in the invention, the proportion of the high-boiling solvent occupied in the aqueous medium is small and is 3% by mass or less. That is, in the invention, even in a case in which the aqueous ink composition is easily dried by suppressing the used amount of the high-boiling solvent and applied to image formation on a low-permeable or non-permeable recording medium, it is possible to form an image at high-speed and with high-precision.

On the other hand, in a case in which drying properties are enhanced, maintenance properties are usually deteriorated. However, in the invention, by introducing a constitutional unit having a specific structure, which will be described later, into the resin fine particles contained in the aqueous ink composition, sufficient maintenance properties can be realized.

In the invention, the "boiling point" is a boiling point under 1 atmosphere ( 1 atm).

The water-soluble organic solvent other than the high-boiling solvent includes alkanediols (polyhydric alcohols) such as ethylene glycol and propylene glycol; sugar alcohols; alkyl alcohols having 1 to 4 carbon atoms such as ethanol, methanol, butanol, propanol, and isopropanol; and glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, triethylene glycol monoethyl ether, l-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol, dipropylene glycol monomethyl ether, dipropylene glycol monoethyl ether, dipropylene glycol mono-n-propyl ether, dipropylene glycol mono-iso-propyl ether, and tripropylene glycol monomethyl ether. These can be used singly or in combination of two or more kinds thereof.

The boiling point of the water-soluble organic solvent other than the high-boiling solvent, which constitutes the aqueous medium according to the invention, is lower than 230°C. preferably lower than 220°C, and more preferably lower than 210°C, from the viewpoint of the drying properties of the aqueous ink composition. In addition, from the viewpoint of maintenance properties, the boiling point of the water-soluble organic solvent other than the high-boiling solvent is usually 100°C or higher, more preferably 120°C or higher, even more preferably 140°C or higher, and particularly preferably 160°C or higher.

The aqueous ink composition according to the embodiment of the invention preferably contains no high-boiling solvent, and even in a case of containing the high-boiling solvent, a concentration of the high-boiling solvent contained in the aqueous medium constituting the aqueous ink composition is suppressed to 3% by mass or less (preferably 2% by mass or less, and more preferably 1% by mass or less). In a case in which the proportion of the high-boiling solvent occupied in the aqueous medium is 3% by mass or less, the drying properties can be sufficiently ensured. Examples of the high-boiling solvent include glycerin, diethylene glycol dibutyl ether, triethylene glycol, triethylene glycol butyl methyl ether, tripropylene glycol, tetraethylene glycol dimethyl ether, 1,2,6-hexanetriol, trimethylolpropane, and a compound represented by Structural Formula (S).

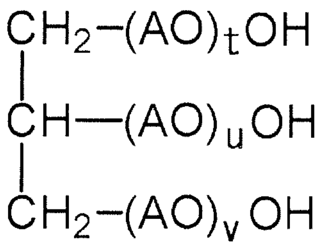

Structural Formula (S)

In Structural Formula (S), t, u, and v each independently represent an integer of 1 or greater, and the relation: $t + u + v = 3$ to 15 is satisfied, the relation: $t + u + v = 3$ to 12 is preferably satisfied, and the relation: $t + u + v = 3$ to 10 is more preferably satisfied. In a case in which the value of $t + u + v$ is 3 or greater, satisfactory inhibitory potential against curling is exhibited, and in a case in which the value is 15 or less, satisfactory jettability is obtained. In Structural Formula (S), AO represents at least one of ethyleneoxy (EO) or propyleneoxy (PO), and above all, a propyleneoxy group is preferred. Various AO's in the moieties $(AO)_t$, $(AO)_u$, and $(AO)_v$ may be identical with or different from each other.

In the following description, examples of a compound represented by Structural Formula (S) are shown. However, the invention is not limited thereto. In the exemplary compounds, the description "POP(3) glyceryl ether" means a glyceryl ether in which three propyleneoxy groups in total are bonded to glycerin, and the same applies to other descriptions.

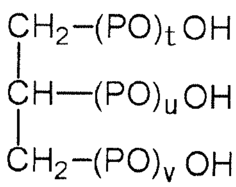

| | |
|---|---|
| t+u+v=3 | POP (3) glyceryl ether |
| t+u+v=4 | POP (4) glyceryl ether |
| t+u+v=5 | POP (5) glyceryl ether |
| t+u+v=6 | POP (6) glyceryl ether |
| t+u+v=7 | POP (7) glyceryl ether |

According to the invention, the water-soluble organic solvents may be used singly, or two or more kinds thereof may be used as a mixture.

The proportion of the water-soluble organic solvent occupied in the aqueous medium constituting the aqueous ink composition is selected as appropriate according to the purpose, and is preferably 1% to 70% by mass, more

preferably 5% to 60% by mass, even more preferably 5% to 50% by mass, and particularly preferably 10% to 40% by mass.

<Resin fine particles>

In the resin fine particles used in the invention, the resin (polymer) constituting the resin fine particles contains at least one kind of constitutional units represented by General Formula (1) or (2). In a case in which the resin constituting the resin fine particle contains at least one kind of constitutional units represented by General Formula (1) or (2), the maintenance properties can be further improved.

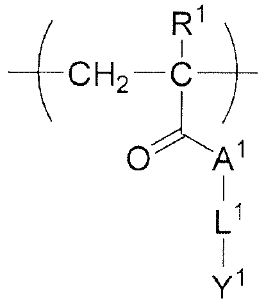

General Formula (1)

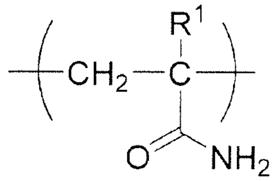

General Formula (2)

In General Formulae (1) and (2), $R^1$ represents a hydrogen atom or an alkyl group having 1 to 4 carbon atoms. R1 is preferably a hydrogen atom or methyl, and more preferably methyl.
$A^1$ represents -O-, -NH-, or $-N(L^2-Y^2)-$. $A^1$ is preferably -O-.
$L^1$ represents an alkylene group, an alkenylene group, an alkynylene group, -O-, -NH-, $-N(L^2-Y^2)-$, or -C(=O)-, or a divalent group formed by combining two or more kinds of these groups.
The number of carbon atoms of the alkylene group which can be employed as $L^1$ is preferably 1 to 10, more preferably 1 to 6, and even more preferably 1 to 3. The number of carbon atoms of each of the alkenylene group and the alkynylene group which can be employed as $L^1$ is preferably 2 to 10, more preferably 2 to 6, and even more preferably 2 or 3. $L^1$ may preferably have a form including -OH, $-OR^2$, $-NH_2$, $-NR^2H$, $-NR^2R^3$, -SH, $-S(=O)_2OM$, or $-OP(=O)(OM)_2$, as a substituent.
In a case in which $L^1$ is an alkylene group, an alkenylene group, an alkynylene group, or a divalent group formed by combining two or more of kinds of -O-, -NH-, $-N(L^2-Y^2)-$, and -C(=O)-, a molecular weight thereof is preferably 90 to 800, and more preferably 100 to 500.
$L^1$ is preferably an alkylene group.
$Y^1$ represents -OH, $-OR^2$, $-NH_2$, $-NR^2H$, $-NR^2R^3$, -SH, $-S(=O)_2OM$, or $-OP(=O)(OM)_2$.
$R^2$ and $R^3$ each represent an alkyl group, an alkenyl group, or an alkynyl group. The number of carbon atoms of the alkyl group which can be employed as $R^2$ and $R^3$ is preferably 1to 10, more preferably 1 to 6, and even more preferably 1 to 3. The preferred number of carbon atoms of the alkenyl group and the alkynyl group which can be employed as $R^2$ and $R^3$ is preferably 2-10, more preferably 2-6, and even more preferably 2 or 3.
M represents a hydrogen atom, an alkali metal ion, or an ammonium ion, and is preferably a hydrogen atom.
$Y^1$ is preferably -OH, $-NH_2$, $-NR^2H$, or $-NR^2R^3$, and more preferably -OH.
$L^2$ represents an alkylene group, an alkenylene group, an alkynylene group, -O-, -NH-, or -C(=O)-, or a divalent group formed by combining two or more kinds of these groups. The number of carbon atoms of the alkylene group which can be employed as $L^2$ is preferably 1 to 10, more preferably 1 to 6, and even more preferably 1 to 3. The number of carbon atoms of each of the alkenylene group and the alkynylene group which can be employed as $L^2$ is preferably 2 to 10, more preferably 2 to 6, and even more preferably 2 or 3.
In a case in which $L^2$ is an alkylene group, an alkenylene group, an alkynylene group, or a divalent group formed by combining two or more of kinds of -O-, -NH-, and -C(=O)-, a molecular weight thereof is preferably 90 to 800, and more preferably 100 to 500.
$L^2$ is preferably an alkylene group.
$Y^2$ has the same definition as $Y^1$, and the preferred form is also the same.
In the resin constituting the resin fine particle used in the invention, a total content of the constitutional units represented by General Formula (1) or (2) is preferably 2% to 50% by mass, more preferably 3% to 40% by mass, even more preferably from 3% to 35% by mass, and particularly preferably 5% to 30% by mass.
Specific preferred examples of the structural units represented by General Formula (1) or (2) are shown below, but the invention is not limited thereto. In Structural Formulae below, Et is ethyl, Pr is propyl, and Bu is butyl.

Specific examples of the structural units represented by General Formula (1)

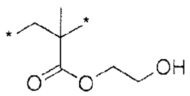 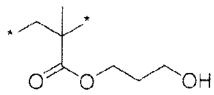 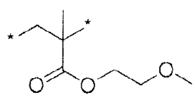 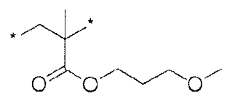 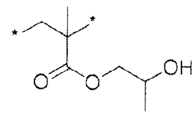

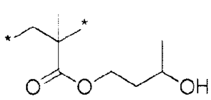 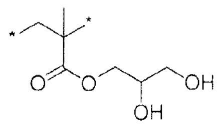 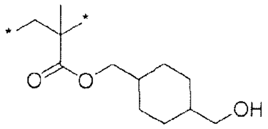 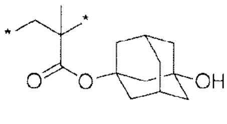

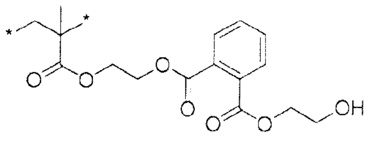 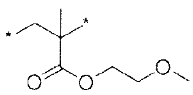 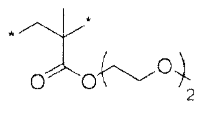 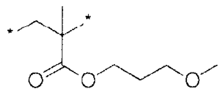

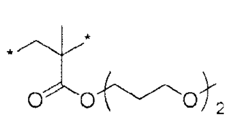 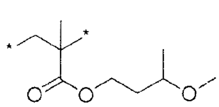 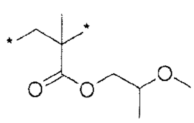 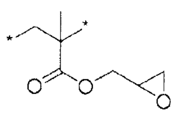 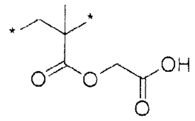

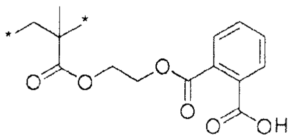 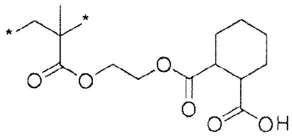 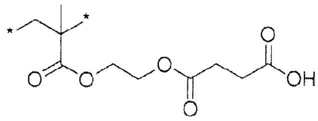

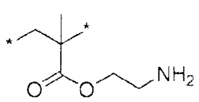 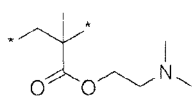 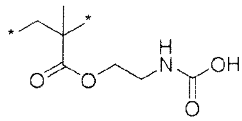 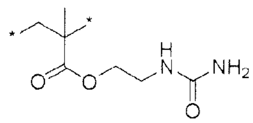

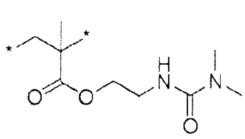 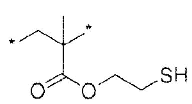 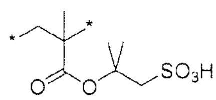 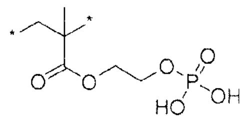

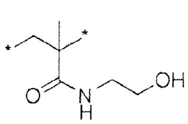 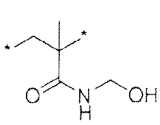 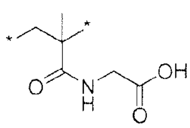 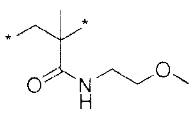 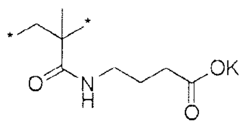

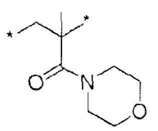

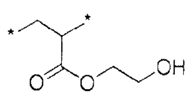 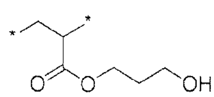 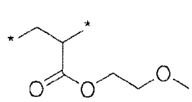 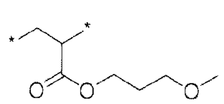 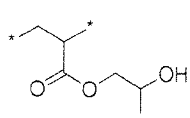

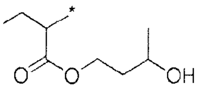
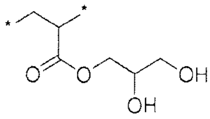
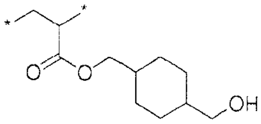
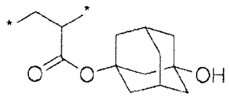

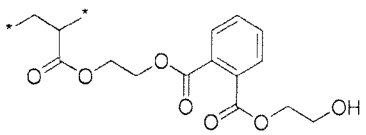
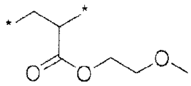
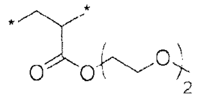
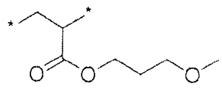

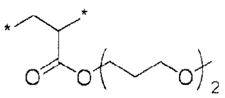
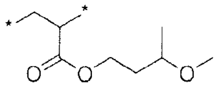
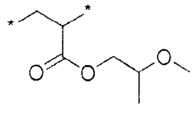
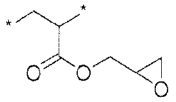
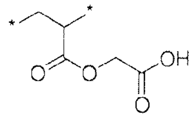

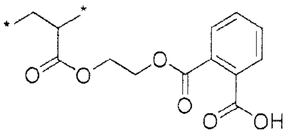
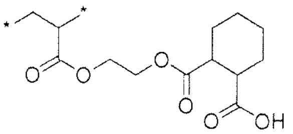
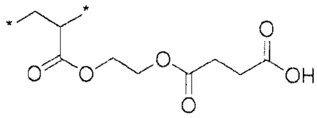

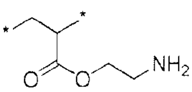
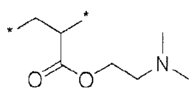
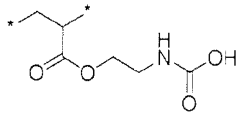
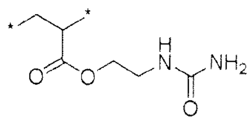

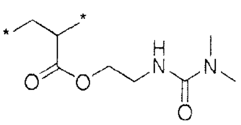
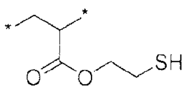
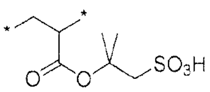
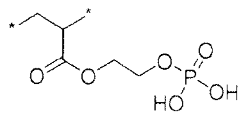

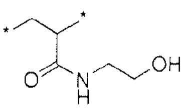
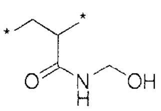
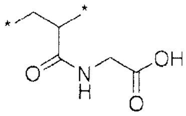
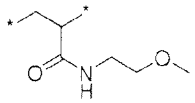
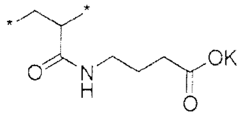

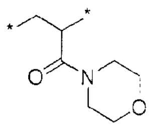

Specific examples of the structural units represented by General Formula (2)

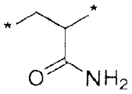
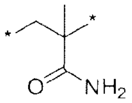
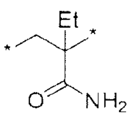
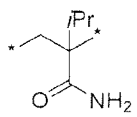
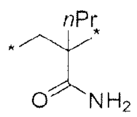
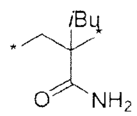
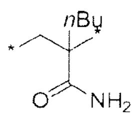
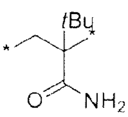

The resin constituting the resin fine particle used in the invention more preferably has the constitutional units represented by General Formula (1).

The resin constituting the resin fine particle used in the invention preferably contains at least one kind of constitutional units represented by any one of General Formulae (A) to (E). By containing at least one kind of constitutional units represented by any one of General Formulae (A) to (E), hydrophobicity of the resin fine particles is appropriately increased, and an aqueous ink composition which is easy to dry can be obtained. That is, it is possible to obtain an aqueous ink composition which is more suitable for application to a low-permeable or non-permeable recording medium. In addition, the mechanical strength of the formed image area can be further increased.

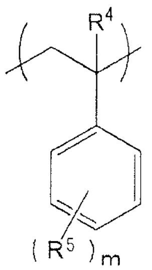
General Formula (A)

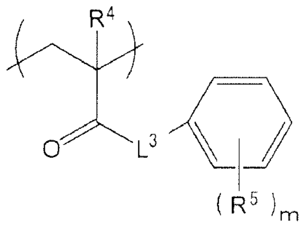
General Formula (B)

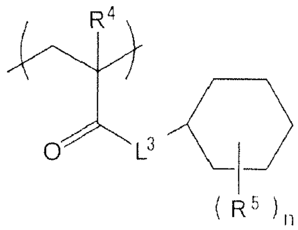
General Formula (C)

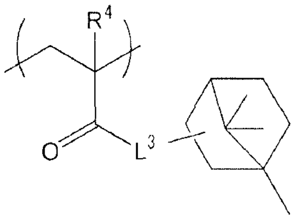
General Formula (D)

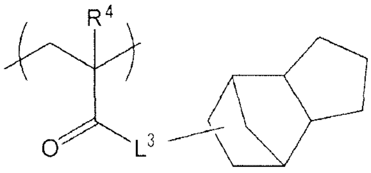
General Formula (E)

In General Formulae (A) to (E), $R^4$ represents a methyl group or a hydrogen atom. In General Formula (A), $R^4$ is preferably a hydrogen atom, and in General Formulae (B) to (E), $R^4$ is preferably methyl.

$R^5$ represents an alkyl group, an alkenyl group, or an alkynyl group. In a case in which $R^5$ is the alkyl group, the number of carbon atoms thereof is preferably 1to 10, more preferably 1 to 6, even more preferably 1 to 4, and particularly preferably 1 to 3. In a case in which $R^5$ is the alkenyl group or alkynyl group, the number of carbon atoms thereof is preferably 2 to 10, more preferably 2 to 6, even more preferably 2 to 4, and particularly preferably 2 or 3.

m is an integer of 0 to 5, preferably an integer of 0 to 2, and more preferably 0 or 1.

n is an integer of 0 to 11, more preferably an integer of 0 to 5, and even more preferably an integer of 0 to 3.

$L^3$ represents a single bond, or an alkylene group having 1 to 18 carbon atoms, an arylene group having 6 to 18 carbon atoms, -O-, -NH-, -S-, or -C(=O)-, or a divalent group formed by combining two or more kinds selected from an alkylene group having 1 to 18 carbon atoms, an arylene group having 6 to 18 carbon atoms, -O-, -NH-, -S-, and -C(=O)-.

The number of carbon atoms of the alkylene group which may contained in $L^3$ is preferably 1 to 12, more preferably 1 to 8, even more preferably 1 to 4, still even more preferably 1 to 3, and particularly preferably 1 or 2. In addition, the number of carbon atoms of the arylene group which may contained in $L^3$ is preferably 6 to 15, more preferably 6 to 12, and even more preferably 6 to 10.

$L^3$ is more preferably -O-, *-O-alkylene group (bonded to a carbonyl group in Formula at *) or -O-alkylene group-O-.

The resin constituting the resin fine particle used in the invention preferably contains at least one kind of constitutional units represented by General Formula (D) or (E) among General Formulae (A) to (E).

In the resin constituting the resin fine particle used in the invention, a total content of the constitutional units represented by General Formulae (A) to (E) is preferably 4% to 65% by mass, more preferably 10% to 60% by mass, and even more preferably from 20% to 55% by mass.

Specific preferred examples of the structural units represented by General Formulae (A) to (E) are shown below, but the invention is not limited thereto. In Formulae below, Bu represents butyl. In addition, * indicates a bonding moiety.

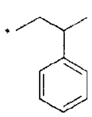
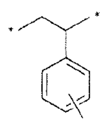
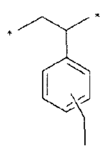
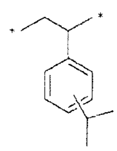
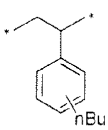
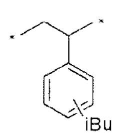
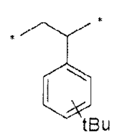
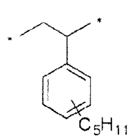

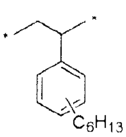
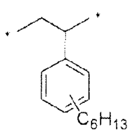
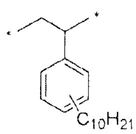
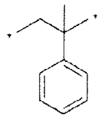
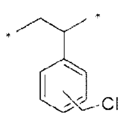

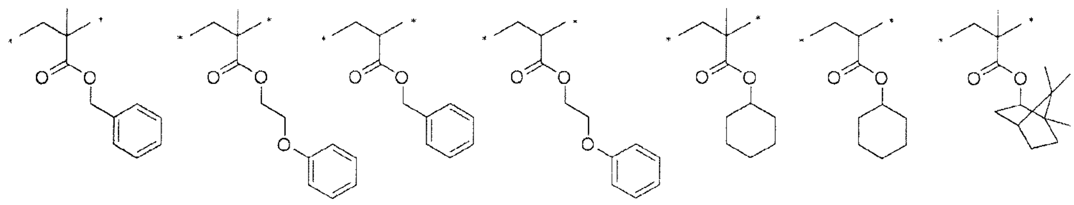

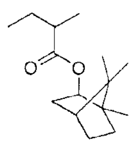

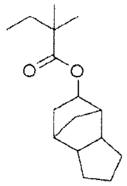

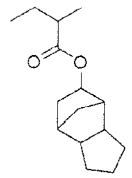

In the resin constituting the resin fine particle used in the invention, a ratio of a total content (i) of the constitutional units represented by General Formula (1) or (2) to a total content (ii) of the constitutional units represented by General Formulae (A) to (E) is (i):(ii) = 2:1 to 1:5 in terms of mass ratio. With such a mass ratio, in addition to achieving a balance between the maintenance properties and the drying properties, rub resistance can be further enhanced.

The resin constituting the resin fine particle used in the invention preferably contains a (meth)acrylic acid component in addition to the above-described constitutional units. A certain hydrophilicity can be imparted to the resin constituting the resin fine particle by containing the (meth)acrylic acid component, and the maintenance properties can be further enhanced by preventing the HSP distance between the aqueous medium and the resin constituting the resin fine particle from being too far apart. The HSP distance will be described later.

In the resin constituting the resin fine particle used in the invention, a total content of the (meth)acrylic acid component is preferably 2% to 20% by mass, and more preferably 4% to 15% by mass.

In addition, the resin constituting the resin fine particle used in the invention preferably contains a (meth)acrylate component. In this case, an alkyl group of the alkyl (meth)acrylate component is unsubstituted. The alkyl group of the alkyl (meth)acrylate component preferably contains 1 to 10 carbon atoms, more preferably 1 to 6 carbon atoms, and even more preferably 1 to 3 carbon atoms. The alkyl (meth)acrylate component is particularly preferably a methyl methacrylate component.

In the resin constituting the resin fine particle used in the invention, a total content of the alkyl (meth)acrylate component is preferably 10% to 80% by mass, more preferably 20% to 70% by mass, and even more preferably 25% to 60% by mass.

The resin constituting the resin fine particle used in the invention may contain a constitutional unit other than the above-described constitutional units within a range not impairing the effects of the invention.

In the aqueous ink composition according to the embodiment of the invention, the HSP distance between the aqueous medium and the resin constituting the resin fine particle is preferably 31.0 or more and 36.0 or less. That is, it is preferable to have a specific relationship in which an affinity between the aqueous medium and the resin constituting the resin fine particle is neither too high nor too low. By satisfying such a relationship between the aqueous medium and the resin constituting the resin fine particle, it is possible to achieve a balance between maintenance properties and drying properties at a higher level, and to effectively improve the mechanical strength of the formed image area. The larger the HSP distance (the larger the numerical value), the higher the hydrophobicity of the resin with respect to the aqueous medium. The HSP distance will be described below.

<HSP distance>

HSP is the Hansen solubility parameter. HSP is a numerical value into which a solubility of a substance (X) in another substance (Z) converted using a multidimensional vector. It is indicated that the shorter the distance between the X and Z vectors, the easier the dissolution (higher compatibility).

In the invention, regarding HSPs of the "aqueous medium" and the "resin constituting the resin fine particle", three vectors ($\delta D$ (dispersion element), $\delta P$ (polarization element), and $\delta H$ (hydrogen bond clement)) are determined using HSPiP software (https://www.pirika.com/JP/HSP/index.html). In the resin constituting the resin fine particle, the dispersion element is denoted by $\delta D_1$, the polarization element is denoted by $\delta P_1$, and the hydrogen bond element is denoted by $\delta H_1$, and in the aqueous medium, the dispersion element is denoted by $\delta D_2$, the polarization element is denoted by $\delta P_2$. and the hydrogen bond element is denoted by $\delta H_2$. Then, the HSP distance between the aqueous medium and the resin constituting the resin fine particle is defined to be applied to the following expression.

$$\text{HSP distance} = \sqrt{4(\delta D_1 - \delta D_2)^2 + (\delta P_1 - \delta P_2)^2 + (\delta H_1 - \delta H_2)^2}$$

- Calculation of $\delta D_1$, $\delta P_1$, and $\delta H_1$ of resin -

δD1, 8P1, and δH1 of the resin are calculated as a total value of values obtained by respectively calculating δD, δP, and δH for each constitutional unit that constitutes the resin, and multiplying the calculated resultants by the mole fraction of each constitutional unit in the resin.

Hereinafter, a specific calculation method will be described. As shown in Table 1. Structural Formula for HSP calculation in each constitutional unit of the resin is converted to Smiles notation using structural formula editor software (ChemBioDraw Ultra 13.0). Thereafter, the bonding point * of the obtained Smiles notation polymer is rewritten to X, and values of δD, δP, and δH of each constitutional unit are calculated by Y-MB of HSPiP (HSPiP 4th edition 4.1.07).

[Table 1]

| | Structural Formula for HSP calculation | Smiles notation | HSP | | |
|---|---|---|---|---|---|
| | | | δD | δP | δH |
| HEMA | 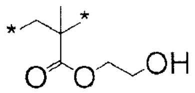 | O=C(OCCO)C(X)(C)CX | 17.2 | 5.3 | 124 |
| IBOMA | 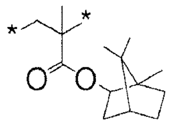 | XCC(C(OC1 CC2CCC1(C)C2(C)C)=O)(C)X | 16.9 | 0.9 | 1.3 |
| MMA | 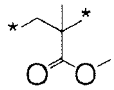 | O=C(OC)C(CX)(C)X | 16.6 | 1.8 | 4.0 |
| MAA | 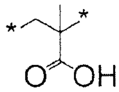 | XC(CX)(C)C(O)=O | 17.0 | 3.4 | 12.6 |

HEM A : 2-hydroxyethylmethacrylate
IBOMA: Isobornyl methacrylate
MMA : Methyl methacrylate
MAA: Methacrylic acid

Each of the calculated δD, δP, and δH of each constitutional unit is multiplied by the mole fraction of each constitutional unit in the resin, and the obtained values are summed to obtain $\delta D_1$, $\delta P_1$, and $\delta H_1$. In the resin consisting of the constitutional units shown in Table 1, in a case in which the mole fractions of HEMA, IBOMA, MMA, and MAA are 0.21, 0.24, 0.40, and 0.15, respectively, $\delta D_1$, $\delta P_1$, and $\delta H_1$ are calculated as follows.

$$\delta D_1 = 0.21 \times 17.2 + 0.24 \times 16.9 + 0.40 \times 16.6 + 0.15 \times 17.0 = 16.9$$

$$\delta P_1 = 0.21 \times 5.3 + 0.24 \times 0.9 + 0.40 \times 1.8 + 0.15 \times 3.4 = 2.6$$

$$\delta H_1 = 0.21 \times 12.4 + 0.24 \times 1.3 + 0.40 \times 4.0 + 0.15 \times 12.6 = 6.4$$

- Calculation of $\delta D_2$, $\delta P_2$, and $\delta H_2$ of aqueous medium -

δD, δP, and δH for each compound constituting the aqueous medium are derived from registration data of HSPiP (HSPiP 4th edition 4.1.07), and the derived resultants are multiplied by the volume fraction of each compound

in the aqueous medium, thereby being calculated as a total value of the obtained values. The volume fraction is a volume fraction at 25°C and under 1 atmosphere.

Hereinafter, a specific calculation method will be described. It is assumed that the aqueous medium is a mixed liquid of water and propylene glycol (PG), and a volume ratio of water to PG is water:PG = 78:22 (volume ratio). δD, δP, and δH of each of water and PC are shown in Table below.

[Table 2]

| | HSP value (registration value) | | |
|---|---|---|---|
| | δD | δP | δH |
| Water ($H_2O$) | 15.5 | 16.0 | 42.3 |
| PG | 16.8 | 10.4 | 21.3 |

In this case, $\delta D_2$, $\delta P_2$, and $\delta H_2$ are calculated as follows.

$$\delta D_2 = 0.78 \times 15.5 + 0.22 \times 16.8 = 15.8$$

$$\delta P_2 = 0.78 \times 16.0 + 0.22 \times 10.4 = 14.8$$

$$\delta H_2 = 0.78 \times 42.3 + 0.22 \times 21.3 = 37.7$$

The HSP distance between the resin and the aqueous medium is as follows.

$$\text{HSP distance} = \{4 \times (16.9 - 15.8)^2 + (2.6\text{-}14.8)^2 + (6.4\text{-}37.7)^2\}^{1/2} = 33.7$$

In the invention, the HSP distance is more preferably 31.0 to 35.0.

The weight-average molecular weight (Mw) of the resin (polymer) constituting the resin fine particles is preferably 5000 to 200000, more preferably 20000 to 200000, and even more preferably 30000 to 80000. The weight-average molecular weight can be measured by gel permeation chromatography (GPC).

In the aqueous ink composition according to the embodiment of the invention, the particle size of the resin fine particles is preferably 1 to 300 nm, more preferably 1 to 100 nm, even more preferably 1 to 50 nm, and still even more preferably 1 to 10 nm from the viewpoint of ink jettability.

The aforementioned particle size of the resin fine particles means the volume average particle diameter. This volume average particle diameter can be measured by the method described in the Examples given below.

In the aqueous ink composition according to the embodiment of the invention, the content of the resin fine particles is preferably 1% to 30% by mass, more preferably 1% to 20% by mass, and even more preferably 2% to 15% by mass from the viewpoint of ink viscosity, rub resistance, scratch resistance, image glossiness.

The resin fine particles can be produced by a phase-transfer emulsification method.

The phase-transfer emulsification method is a method in which a resin to be dispersed is dissolved in a hydrophobic organic solvent which can dissolve the resin, a compound (for example, a base) for neutralizing a salt-forming group (for example, an acidic group) contained in the resin is added to the obtained solution (organic continuous phase) such that the salt generating group is neutralized, and then an aqueous medium (W-phase) is added thereto such that the form of the resin undergoes conversion (so-called phase-transfer) from W/O to O/W, thereby dispersing the resin in the aqueous medium in the form of particles.

It is more preferable that the above-described resin fine particles are self-dispersing resin fine particles.

Here, self-dispersing resin fine particles refer to a water-insoluble resin which can be brought to a dispersed state in an aqueous medium by means of the functional group (particularly an acidic group or a salt thereof) carried by the resin itself, in a case in which the resin is in the dispersed state in the absence of surfactant by the phase-transfer emulsification method.

Here, the dispersed state includes both an emulsified state (emulsion) in which a water-insoluble resin is dispersed in a liquid state in an aqueous medium, and a dispersed state (suspension) in which a water-insoluble resin is dispersed in a solid state in an aqueous medium.

The term "water-insoluble" means that the dissolved amount in 100 parts by mass of water (25°C) is 5.0 parts by mass or less.

<Colorant>

The aqueous ink composition according to the embodiment of the invention can be used not only for the formation of a monochromic image but also for the formation of a polychromic image (for example, a full color image), and it is possible to form an image by selecting one or two or more desired colors. In a case in which a full color image is formed, the aqueous ink composition can be used as, for example, a magenta tone ink, a cyan tone ink, and a yellow tone ink. Furthermore, the aqueous ink composition can be used as a black tone ink.

In addition, the aqueous ink composition according to the embodiment of the invention can be used as aqueous ink compositions of red (R), green (G), blue (B), and white (W) tones other than yellow (Y), magenta (M), cyan (C), and black (K) tones, ink compositions of special colors in the so-called printing field, or the like.

In the aqueous ink composition according to the embodiment of the invention, it is possible to use known dyes, pigments, and the like with no limitation as the colorant. From the viewpoint of the colorability of a formed image, a colorant which is rarely or not easily dissolved in water is preferred. Specific examples thereof include a variety of pigments, dispersed dyes, oil-soluble dyes, coloring agents which form a J-aggregate, and the like. Furthermore, light resistance is taken into account, pigments are more preferred. The content of the colorant in the aqueous ink composition according to the embodiment of the invention is preferably 1% to 20% by mass, and more preferably 1% to 10% by mass.

There are no particular limitations on the type of the pigment that is used in the aqueous ink composition according to the embodiment of the invention, and any conventional organic or inorganic pigment can be used.

Examples of the organic pigment include an azo pigment, a polycyclic pigment, a chelate dye, a nitro pigment, a nitroso pigment, and aniline black. Among these, an azo pigment or a polycyclic pigment is preferred.

Examples of the azo pigment include an azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate, and an acid dye-type chelate.

Examples of the inorganic pigment include titanium oxide, iron oxide, calcium carbonate, barium sulfate, aluminum hydroxide, Barium Yellow, Cadmium Red, Chrome Yellow, and carbon black.

Specific examples of the pigment that can be used in the invention include the pigments described in paragraphs 0142 to 0145 of JP2007-100071 A.

The volume average particle diameter of the pigment in the aqueous ink composition according to the embodiment of the invention is preferably 10 to 200 nm, more preferably 10 to 150 nm, and even more preferably 10 to 100 nm. As the volume average particle diameter is 200 nm or less, satisfactory color reproducibility is obtained, and in the case of an inkjet method, satisfactory jetting properties are obtained. As the volume average particle diameter is 10 nm or more, satisfactory light resistance is obtained. The volume average particle diameter of the pigment in the aqueous ink composition can be measured by a known measurement method. Specifically, the volume average particle diameter can be measured by a centrifugal sedimentation light transmission method, an X-ray transmission method, a laser diffraction/light scattering method, or a dynamic light scattering method.

There are no particular limitations on the particle size distribution of the pigment in the aqueous ink composition according to the embodiment of the invention, and the particle size distribution may be any one of a wide particle size distribution and a monodisperse particle size distribution. Also, two or more kinds of colorants each having a monodisperse particle size distribution may be used as a mixture.

The volume average particle diameter of the pigment can be measured by a method similar to the measurement of the volume average particle diameter of the resin fine particles described above.

In a case in which the aqueous ink composition according to the embodiment of the invention includes a pigment, from the viewpoints of colorability and storage stability, the content of the pigment in the aqueous ink composition is preferably 1% to 20% by mass, and more preferably 1% to 10% by mass.

- Dispersant -

In a case in which the aqueous ink composition according to the embodiment of the invention includes a pigment, as the pigment, it is preferable to produce coloring particles in which a pigment is dispersed in an aqueous medium by a dispersant (hereinafter, simply referred to as "coloring particles"), and use this as a raw material of the aqueous ink composition.

The dispersant may be a polymeric dispersant, or may be a low-molecular-weight surfactant-type dispersant.

Furthermore, the polymeric dispersant may be any of a water-soluble polymeric dispersant and a water-insoluble polymeric dispersant.

In regard to the low-molecular-weight surfactant-type dispersant, for example, the known low-molecular-weight surfactant-type dispersants described in paragraphs 0047 to 0052 of JP2011-178029A can be used.

Among the polymeric dispersants, a hydrophilic polymer compound may be mentioned as the water-soluble dispersant. Examples thereof include, as naturally occurring hydrophilic polymer compounds, plant polymers such as gum arabic, gum tragacanth, guar gum, karaya gum, locust bean gum, arabinogalactone, pectin, and quince seed starch; seaweed-based polymers such as alginic acid, carrageenan, and agar; animal-based polymers such as gelatin, casein, albumin, and collagen; and microorganism-based polymers such as xanthan gum and dextran.

Examples of a modified hydrophilic polymer compound obtained by using a natural product as a raw material, include cellulose-based polymers such as methyl cellulose, ethyl cellulose, hydroxyethyl cellulose, hydroxypropyl cellulose, and carboxymethyl cellulose: starch-based polymers such as sodium starch glycolate and starch phosphoric acid ester sodium; and seaweed-based polymers such as sodium alginate and alginic acid propylene glycol ester.

Furthermore, examples of a synthetic hydrophilic polymer compound include vinylic polymers such as polyvinyl alcohol, polyvinylpyrrolidone, and polyvinyl methyl ether; acrylic resins such as non-crosslinked polyacrylamide, polyacrylic acid or an alkali metal salt thereof, and a water-soluble styrene-acrylic resin; a water-soluble styrene-maleic acid resin, a water-soluble vinylnaphthalene-acrylic resin, a water-soluble vinylnaphthalene-maleic acid resin, a polymer compound having an alkali metal salt of polyvinylpyrrolidone, polyvinyl alcohol or a β-naphthalenesulfonic acid-formalin condensate, or a salt of a cationic functional group such as a quaternary ammonium or an amino group in a side chain; and a naturally occurring polymer compound such as shellac.

Among these, a hydrophilic polymer compound having a carboxyl group introduced therein, such as a homopolymer of acrylic acid or methacrylic acid, or a copolymer of acrylic acid or methacrylic acid with another monomer, is preferred.

The water-insoluble polymeric dispersant is not particularly limited as long as it is a water-insoluble polymer and is capable of dispersing a pigment, and any conventionally known water-insoluble polymeric dispersant can be used. A water-insoluble polymeric dispersant can be configured to include, for example, both a hydrophobic structural unit and a hydrophilic structural unit.

Here, examples of the monomer component that constitutes a hydrophobic structural unit include a styrene-based monomer component, an alkyl (meth)acrylate component, and an aromatic group-containing (meth)acrylate component.

The monomer component that constitutes a hydrophilic structural unit is not particularly limited as long as it is a monomer component containing a hydrophilic group. Examples of this hydrophilic group include a nonionic group, a carboxyl group, a sulfonic acid group, and a phosphoric acid group. Examples of the nonionic group include a hydroxyl group, an amide group (having an unsubstituted nitrogen atom), a group derived from an alkylene oxide polymer (for example, polyethylene oxide or polypropylene oxide), and a group derived from a sugar alcohol.

It is preferable that the hydrophilic structural unit includes at least a carboxyl group from the viewpoint of dispersion stability, and an embodiment in which the hydrophilic structural unit includes both a nonionic group and a carboxyl group is also preferred.

Specific examples of the water-insoluble polymeric dispersant include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer, and a styrene-maleic acid copolymer.

It is preferable that the water-insoluble polymeric dispersant is a vinyl polymer containing a carboxyl group, from the viewpoint of the dispersion stability of the pigment. Furthermore, it is more preferable that the water-insoluble polymeric dispersant is a vinyl polymer having at least a structural unit derived from an aromatic group-containing monomer as a hydrophobic structural unit and having a structural unit including a carboxyl group as a hydrophilic structural unit.

The weight-average molecular weight of the water-insoluble polymeric dispersant is preferably 3000 to 200000, more preferably 5000 to 100000, even more preferably 5000 to 80000, and particularly preferably 10000 to 60000, from the viewpoint of the dispersion stability of the pigment.

The content of the dispersant in the coloring particles is preferably 10 to 90 parts by mass, more preferably 20 to 70 parts by mass, and particularly preferably 30 to 50 parts by mass, with respect to 100 parts by mass of the pigment, from the viewpoints of the dispersibility of the pigment, ink colorability, and dispersion stability.

As the content of the dispersant in the coloring particles is in the range described above, the pigment is covered with an appropriate amount of a dispersant, and coloring particles having a small particle size and excellent temporal stability tend to be easily obtained, which is preferable.

The coloring particles are obtained by, for example, dispersing a mixture including a pigment, a dispersant and a solvent as necessary (preferably an organic solvent), by means of a dispersing machine.

More specifically, for example, a dispersion can be produced by providing a step of adding an aqueous solution

including a basic substance to a mixture of a pigment, a dispersant, and an organic solvent for dissolving or dispersing this dispersant (mixing and hydration step), followed by a step of removing the organic solvent (solvent removal step). Thereby, the pigment is finely dispersed, and a dispersion of coloring particles having excellent storage stability can be produced.

The organic solvent needs to be capable of dissolving or dispersing a dispersant; however, in addition to this, it is preferable that the organic solvent has an affinity to water to some extent. Specifically, an organic solvent having a solubility in water at 20°C of 10% to 50% by mass is preferred.

Preferred examples of the organic solvent include water-soluble organic solvents. Among them, isopropanol, acetone, and methyl ethyl ketone are preferred, and particularly, methyl ethyl ketone is preferred. The organic solvents may be used singly, or a plurality of solvents may be used together.

The basic substance is used for the neutralization of the anionic group (preferably, carboxyl group) that may be carried by the polymer. The degree of neutralization of the anionic group is not particularly limited. Usually, it is preferable that the acidity or alkalinity of the dispersion of the colorant particles that are finally obtained is, for example, pH 4.5 to 10. The pH may be determined by the desired degree of neutralization of the polymer.

Regarding the removal of the organic solvent in the process for producing a dispersion of coloring particles, the method is not particularly limited, and the organic solvent can be removed by any known method such as distillation under reduced pressure.

In the aqueous ink composition according to the embodiment of the invention, the coloring particles may be used singly or in combination of two or more kinds.

<Surfactant>

The aqueous ink composition according to the embodiment of the invention may include a surfactant as a surface tension adjuster.

As the surfactant, any one of an anionic surfactant, a cationic surfactant, an amphoteric surfactant, a nonionic surfactant, and a betaine-based surfactant can be used.

Specific examples of the anionic surfactant include, for example, sodium dodecyl benzenesulfonate, sodium lauryl sulfate, sodium alkyldiphenyl ether disulfonate, sodium alkyl naphthalanesulfonate, sodium dialkyl sulfosuccinate, sodium stearate, potassium oleate, sodium dioctyl sulfosuccinate, sodium polyoxyethylene alkyl ether sulfate, sodium polyoxyethylene alkyl phenyl ether sulfate, sodium oleate, sodium t-octylphenoxy ethoxy polyethoxy ethyl sulfate, and the like. One kind or two or more kinds thereof can be selected.

Specific examples of the nonionic surfactant include, for example, an acetylene diol derivative such as an ethylene oxide adduct of acetylene diol, polyoxyethylene lauryl ether, polyoxyethylene octyl phenyl ether, polyoxyethylene oleyl phenyl ether, polyoxyethylene nonyl phenyl ether, an oxyethylene-oxypropylene block copolymer, t-octylphenoxyethyl polyethoxyethanol, and nonylphenoxyethyl polyethoxyethanol. One kind or two or more kinds of these can be selected.

Examples of the cationic surfactant include a tetraalkylammonium salt, an alkylamine salt, a benzalkonium salt, an alkylpyridium salt, and an imidazolium salt. Specific examples thereof include dihydroxyethylstearylamine, 2-heptadecenylhydroxyethylimidazoline, lauryldimethylbenzylammonium chloride, cetylpyridinium chloride, and stearamidomethylpyridium chloride.

Among these surfactants, nonionic surfactants are preferred in view of stability, and an acetylene diol derivative is more preferred.

In the case of using the aqueous ink composition according to the embodiment of the invention in an inkjet recording method, from the viewpoint of ink jettability, it is preferable to adjust the amount of the surfactant so as to obtain a surface tension of the aqueous ink composition of 20 to 60 mN/m, more preferably 20 to 45 mN/m, and even more preferably 25 to 40 mN/m.

The surface tension of the aqueous ink composition is measured using an automatic surface tensiometer, CBVP-Z (manufactured by Kyowa Interface Science Co., Ltd.), at a temperature of 25°C.

The content of the surfactant in the aqueous ink composition is preferably an amount with which the surface tension of the aqueous ink composition can be adjusted to the range described above. More specifically, the content of the surfactant in the aqueous ink composition is preferably 0.1% by mass or more, more preferably 0.1% to 10% by mass, and even more preferably 0.2% to 3% by mass.

<Other components>

The aqueous ink composition according to the embodiment of the invention may further have mixed therein, as necessary, additives such as an anti-drying agent (swelling agent), a coloration preventing agent, a penetration enhancer, an ultraviolet absorber, a preservative, a rust inhibitor, an anti-foaming agent, a viscosity modifier, a pH

adjusting agent, and a chelating agent. The mixing method is not particularly limited, and the aqueous ink composition according to the embodiment of the invention can be obtained by selecting any conventionally used mixing method as appropriate.

<Physical properties of aqueous ink composition>

The viscosity at 30°C of the aqueous ink composition according to the embodiment of the invention is preferably from 1.2 mPa·s to 15.0 mPa·s, more preferably 2 mPa·s or more and less than 13 mPa·s, and even more preferably 2.5 mPa·s or more and less than 10 mPa·s,

The viscosity of the aqueous ink composition is measured using a VISCOMETER TV-22 (manufactured by Toki Sangyo Co., Ltd.) at a temperature of 30°C.

The pH of the aqueous ink composition according to the embodiment of the invention is preferably such that the pH at 25°C is 6 to 11, from the viewpoint of dispersion stability. In a case in which the ink set that will be described below is prepared, since it is preferable that the aqueous ink composition aggregates at high-speed as a result of contact with a treatment agent, a pH of 7 to 10 at 25°C is more preferred, and a pH of 7 to 9 is even more preferred.

[Ink set]

The ink set of the invention includes at least a part including the aqueous ink composition (containing a pigment) of the invention, and a treatment agent that can form an aggregate of the pigment by being brought into contact with the aqueous ink composition. The ink set of the invention may also include a maintenance liquid that is used to remove any aqueous ink composition adhered to an inkjet recording head (for example, solid ink residue that has been solidified by drying).

By forming an image obtained using the aqueous ink composition of the embodiment of the invention and the treatment agent, an image having excellent quality can be formed.

In the following description, the treatment agent that constitutes the ink set will be explained.

<Treatment agent>

The treatment agent constituting the ink set according to the embodiment of the invention contains a component capable of forming an aggregate (an aggregation-inducing component) including the pigment in the aqueous ink composition, by being brought into contact with the ink composition. This aggregation component may be a component selected from an acidic compound, a polyvalent metal salt, and a cationic polymer, and it is preferable that the aggregation-inducing component is an acidic compound. The treatment agent may also include other components as necessary, in addition to the aggregation-inducing component.

The treatment agent that constitutes the ink set of the invention is usually in the form of an aqueous solution.

- Acidic compound -

An acidic compound is capable of aggregating (immobilizing) components in the aqueous ink composition by being brought into contact with the aqueous ink composition on a recording medium, and thus functions as an immobilizing agent. For example, as the aqueous ink composition is jetted onto a recording medium (preferably, coated paper) in a state in which a treatment agent including an acidic compound has been applied onto this recording medium, components in the aqueous ink composition can be caused to aggregate, and thus the aqueous ink composition can be immobilized on the recording medium.

Examples of the acidic compound include sulfuric acid, hydrochloric acid, nitric acid, phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, metaphosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, oxalic acid, acetic acid, and benzoic acid. From the viewpoint of achieving a balance between the suppression of volatilization and the solubility in a solvent, the acidic compound is preferably an acid having a molecular weight of from 35 to 1,000, more preferably an acid having a molecular weight of from 50 to 500, and particularly preferably an acid having a molecular weight of from 50 to 200. Also, regarding pKa (in $H_2O$, 25°C), from the viewpoint of achieving a balance between the prevention of ink bleeding and the photocuring properties, an acid having a pKa of from -10 to 7 is preferred, an acid having a pKa of from 1 to 7 is more preferred, and an acid having a pKa of from 1 to 5 is particularly preferred.

Regarding the pKa, the calculated values obtained based on Advanced Chemistry Development (ACD/Labs) Software V11.02 (1994-2014 ACD/Labs), or the values described in the literature (for example, J. Phys. Chem. A, 2011,

115. 6641 to 6645) can be used.

Among these, an acidic compound having high water-solubility is preferred. From the viewpoint of reacting with the aqueous ink composition and immobilizing the entire ink, a trivalent or lower-valent acidic compound is preferred, and a divalent or trivalent acidic compound is particularly preferred.

Regarding the treatment agent, the acidic compounds may be used singly, or two or more kinds thereof may be used in combination.

In a case in which the treatment agent is an aqueous solution including an acidic compound, the pH (25°C) of the treatment agent is preferably 0.1 to 6.8, more preferably 0.1 to 6.0, and even more preferably 0.1 to 5.0.

In a case in which the treatment agent includes an acidic compound as an aggregation component, the content of the acidic compound in the treatment agent is preferably 40% by mass or less, more preferably 15% to 40% by mass, even more preferably 15% to 35% by mass, and particularly preferably 20% to 30% by mass. By adjusting the content of the acidic compound in the treatment agent to be 15% to 40% by mass, the components in the aqueous ink composition can be immobilized more efficiently.

In a case in which the treatment agent includes an acidic compound as an aggregation-inducing component, the amount of application of the treatment agent to the recording medium is not particularly limited as long as it is an amount sufficient for aggregating the aqueous ink composition; however, from the viewpoint that the aqueous ink composition can be easily immobilized, it is preferable to apply the treatment agent such that the amount of application of the acidic compound will be 0.5 g/$m^2$ to 4.0 g/$m^2$, and it is preferable to apply the treatment agent such that the amount of application will be 0.9 g/$m^2$ to 3.75 g/$m^2$.

- Polyvalent metal salt -

Regarding the treatment agent, an embodiment of including one kind or two or more kinds of polyvalent metal salts as the aggregation-inducing component is also preferable. By containing a polyvalent metal salt as an aggregation-inducing component, high-speed aggregating properties can be enhanced. Examples of the polyvalent metal salt include salts of the Group 2 alkaline earth metals in the Periodic Table (for example, magnesium and calcium), salts of the Group 3 transition metals in the Periodic Table (for example, lanthanum), salts of the Group 13 cations in the Periodic Table (for example, aluminum), and salts of lanthanides (for example, neodymium). As the salts of a metal, carboxylate (formic acid, acetic acid, benzoate, or the like), nitrate, chloride, and thiocyanate are suitable. Among them, preferred examples thereof include calcium salt or magnesium salt of a carboxylic acid (formic acid, acetic acid, benzoate, or the like), calcium salt or magnesium salt of nitric acid, calcium chloride, magnesium chloride, and calcium salt or magnesium salt of thiocyanic acid.

In a case in which the treatment agent includes a polyvalent metal salt as the aggregation-inducing component, the content of the polyvalent metal salt in the treatment agent is preferably 1% to 10% by mass, more preferably 1.5% to 7% by mass, and even more preferably in the range of 2% to 6% by mass, from the viewpoint of the aggregation inductive effect.

It is also preferable that the treatment agent includes one kind or two or more kinds of cationic polymers as the aggregation-inducing component. Regarding the cationic polymer, a homopolymer of a cationic monomer having a primary to tertiary amino group or a quaternary ammonium salt group as a cationic group, or a product obtainable as a copolymer or a polycondensation reaction product of this cationic monomer and a non-cationic monomer is preferred. The cationic polymer may be used in the form of any one of a water-soluble polymer and water-dispersible latex particles.

Specific preferred examples of the cationic polymer include cationic polymers such as poly(vinylpyrridine) salt, polyalkylaminoethyl acrylate, polyalkylaminoethyl methacrylate, poly(vinylimidazole), polyethyleneimine, polybiguanide, polyguanide, and polyallylamine and derivatives thereof.

Regarding the weight-average molecular weight of the cationic polymer, a polymer having a small molecular weight is preferred from the viewpoint of the viscosity of the treatment agent. In a case in which the treatment agent is applied onto a recording medium by an inkjet method, the weight-average molecular weight is preferably in the range of 1,000 to 500,000, more preferably in the range of 1,500 to 200,000, and even more preferably in the range of 2,000 to 100,000. In a case in which the weight-average molecular weight is 1,000 or more, it is advantageous from the viewpoint of the rate of aggregation, and in a case in which the weight-average molecular weight is 500,000 or less, it is advantageous in view of jetting reliability. However, exceptions are made in a case in which the treatment agent is applied onto a recording medium by a method other than an inkjet.

In a case in which the treatment agent includes a cationic polymer as the aggregation-inducing component, the content of the cationic polymer in the treatment agent is preferably 1% to 50% by mass, more preferably 2% to 30% by mass, and even more preferably in the range of 2% to 20% by mass, from the viewpoint of the aggregation inductive effect.

[Image-forming method]

The image-forming method according to the embodiment of the invention is an image-forming method using the aqueous ink composition according to the embodiment of the invention that contains a pigment.
The image-forming method of the embodiment of the invention preferably includes a treatment agent application step of applying the treatment agent onto a recording medium; and an ink application step of applying the aqueous ink composition of the embodiment of the invention containing a pigment onto the recording medium after the treatment agent application step, and thereby forming an image.

<Recording medium>

The recording medium used in the inkjet recording method of the invention is not particularly limited, may be a permeable recording medium which is a paper medium, or may be a low-permeable recording medium represented by coated paper (coat paper). A non-permeable recording medium such as plastic, metal, and glass is also preferable. The aqueous ink composition according to the embodiment of the invention can be dried quickly even in a case in which an image area is formed on the low-permeable or non-permeable recording medium, and a desired image can be formed at high-speed and with high-precision.
In the invention, the "low-permeable recording medium" means a recording medium having a water absorption coefficient Ka of 0.05 to 0.5 $mL/m^2 \cdot ms^{1/2}$. In addition, in the invention, the "non-permeable recording medium" means a recording medium having a water absorption coefficient Ka of less than 0.05 $mL/m^2 \cdot ms^{1/2}$.
The water absorption coefficient Ka has the same definition as described in JAPAN TAPPI paper pulp test method No. 51:2000 (published by the Technical Association of the Pulp and Paper Industry), and specifically, the water absorption coefficient Ka is calculated from the difference of the transfer amount of water under the conditions of a contact time of 100 ms and a contact time of 900 ms measured using an automatic scanning liquid absorptometer, KM500Win (manufactured by Kumagai Riki Kogyo Co., Ltd.).
The non-permeable base material is not particularly limited, but a resin base material is preferred. The resin base material is not particularly limited, and examples thereof include a base material obtained by molding a thermoplastic resin into a sheet shape. The resin base material preferably contains polypropylene, polyethylene terephthalate, nylon, polyethylene, or polyimide.
The resin base material may be a transparent resin base material or a colored resin base material, or at least a part thereof may be subjected to metal vapor deposition treatment or the like.
A shape of the resin base material is not particularly limited. The resin base material is usually a sheet-shaped resin base material, and more preferably a sheet-shaped resin base material capable of being formed as a roll by winding, from the viewpoint of the productivity of a recorded medium.
A thickness of the resin base material is preferably 10 μm to 200 μm, and more preferably 10 μm to 100 μm.
A surface of the resin base material may be treated from the viewpoint of improving the surface energy.
Examples of the surface treatment include, but are not limited to, corona treatment, plasma treatment, frame treatment, heat treatment, abrasion treatment, light irradiation treatment (UV treatment), flame treatment, and the like.
The corona treatment can be performed using, for example, a corona master (manufactured by Shinko Electric & Instrumentation Co., Ltd., PS-10S).
The conditions of the corona treatment may be appropriately selected in accordance with the situations such as the type of the resin base material or the ink compositions. Examples of the conditions include the following treatment conditions.

· Treatment voltage: 10 to 15.6 kV
· Treatment speed: 30 to 100 mm/s

<Treatment agent application step>

In the treatment agent application step, the treatment agent included in the ink set is applied onto a recording medium. The treatment agent is usually applied onto the recording medium in the form of an aqueous solution. Regarding the application of the treatment agent onto the recording medium, any known liquid applying method can be used without any particular limitations, and any methods such as spray coating, coating with a coating roller or the like, application by an inkjet method, or immersion can be selected.
Specific examples thereof include size press methods represented by a horizontal size press method, a roll coater method, and a calendar size press method; size press methods represented by an air knife coater method; knife coater methods represented by an air knife coater method; roll coater methods represented by a transfer roll coater method such as a gate roll coater method, a direct roll coater method, a reverse roll coater method, and a squeeze roll

coater method; a building blade coater method, a short dwell coater method; blade coater methods represented by a two stream coater method; bar coater methods represented by a rod bar coater method; bar coater methods represented by a rod bar coater method; a cast coater method; a gravure coater method; a curtain coater method; a die coater method; a brush coater method; and a transfer method.

A method of applying the treatment agent by controlling the amount of application by using a coating apparatus equipped with a liquid amount restriction member, such as the coating apparatus described in JP1998-230201A (JP-H10-230201A), may also be employed.

The region onto which the treatment agent is applied may be entire surface application of applying the treatment agent over the entire recording medium, or may be partial application of partially applying the treatment agent onto regions where ink will be applied in the ink application step. According to the invention, from the viewpoints of uniformly adjusting the amount of application of the treatment liquid, homogeneously recording fine lines or fine image areas, and suppressing density unevenness such as image unevenness, entire surface application of applying the treatment agent over the entire image-forming surface of the recording medium through coating using a coating roller or the like, is preferred.

Regarding a method of coating by controlling the amount of application of the treatment agent to the range described above, for example, a method of using an anilox roller may be used. An anilox roller is a roller in which the roller surface is coated with ceramic by thermal spraying and processed with a laser, such that shapes such as pyramidal shapes, diagonal lines, tortoiseshell shapes are formed thereon. In a case in which the treatment liquid infiltrates into the recess portions formed on this roller surface and is brought into contact with the paper surface, the treatment liquid is transferred and is applied in a coating amount that has been controlled by the recesses of the anilox roller.

<Ink application step>

In the ink application step, the aqueous ink composition included in the ink set is applied onto the recording medium. Regarding the method of applying the aqueous ink composition, there are no particular limitations as long as it is a method capable of applying the aqueous ink composition onto a desired imagewise, and any known ink applying method can be used. For example, a method of applying an aqueous ink composition onto a recording medium using means such as an inkjet method, a mimeographic method, or a transfer printing method, may be mentioned. Above all, from the viewpoints of compactization of the recording apparatus and high-speed recording properties, a step of applying the aqueous ink composition by an inkjet method is preferred.

In regard to image formation by an inkjet method, the aqueous ink composition is jetted onto the recording medium by supplying energy, and thus a colored image is formed. As an inkjet recording method that is preferable for the invention, the method described in paragraphs 0093 to 0105 of JP2003-306623A is applicable.

There are no particular limitations on the inkjet method, and the inkjet method may be any known method, for example, an electric charge control method in which ink is jetted by utilizing the electrostatic attraction force; a drop-on-demand method (pressure pulse method) in which the vibration pressure of a piezoelectric element is utilized; an acoustic inkjet method in which electric signals are converted into acoustic beams and irradiated onto ink, and the ink is jetted by utilizing the radiation pressure; or a thermal inkjet method in which air bubbles are formed by heating ink, and the pressure thus generated is utilized.

The inkjet head used in the inkjet method may be an on-demand method, or may be a continuous method. The ink nozzles and the like that are used in the case of performing recording by the inkjet method, are also not particularly limited and can be selected as appropriate according to the purpose.

The inkjet method includes a method of ejecting a large number of small-volume droplets of an ink having low density, which is so-called photo ink; a method of improving the image quality by using a plurality of inks that have substantially the same color but different densities; and a method of using a colorless and transparent ink.

The inkjet method also includes a shuttle method of using a short serial head, and performing recording while the head is caused to scan in the width direction of the recording medium; and a line method of using a line head in which recording elements are arranged correspondingly to the entire range of one side of a recording medium. In the line method, image recording can be carried out over the entire surface of a recording medium by scanning the recording medium in a direction orthogonally intersecting the direction of arrangement of the recording elements, and thus a transport system such as a carriage scanning a short head is not needed. Also, complicated control of scanning between the movement of the carriage and the recording medium is not needed, and since only the recording medium is moved, an increase in the recording speed can be realized compared to a shuttle method.

According to the invention, there are no particular limitations on the order of implementation of the treatment agent application step and the ink application step: however, from the viewpoint of image quality, an embodiment in which the ink application step follows the acid treatment agent application step is preferred. That is, it is preferable that the ink application step is a step of applying the aqueous ink composition according to the embodiment of the invention onto a recording medium onto which the treatment agent has been applied.

In a case in which the ink application step is carried out by an inkjet method, from the viewpoint of forming a high-definition print, the amount of liquid droplets of the aqueous ink composition jetted by the inkjet method is preferably 1.5 to 3.0 pL, and more preferably 1.5 to 2.5 pL. The amount of liquid droplets of the aqueous ink composition that is jetted can be regulated by appropriately adjusting the jetting conditions.

<Ink drying step>

As necessary, the image-forming method according to the embodiment of the invention may comprise an ink drying step of drying and removing the solvent (for example, water or the aqueous medium described above) in the aqueous ink composition that has been applied onto the recording medium. The ink drying step is not particularly limited as long as at least a portion of the solvent in the ink can be removed, and any generally used method is applicable.

<Thermal fixing step>

As necessary, it is preferable that the image-forming method according to the embodiment of the invention comprises a thermal fixing step after the ink drying step. Fixation of the image on the recording medium is achieved by applying a thermal fixing treatment, and the resistance of the image to abrasion can be further enhanced. As the thermal fixing step, for example, the thermal fixing step described in paragraphs [0112] to [0120] of JP2010-221415A can be employed.

<Ink removing step>

As necessary, the inkjet recording method of the invention may include an ink removing step of removing the aqueous ink composition adhering to the inkjet recording head (for example, solid ink residue that has been solidified by drying) using a maintenance liquid. Regarding the details of the maintenance liquid and the ink removing step, the maintenance liquid and the ink removing step described in WO2013/180074A can be preferably applied.

**EXAMPLES**

Hereinafter, the present invention will be specifically described by way of Examples; however, the invention is not intended to be limited to these Examples. Unless particularly stated otherwise, the units "parts" and "percent (%)" are on a mass basis.

[Production of resin fine particles] <Synthesis of resin>

281.0 g of methyl ethyl ketone was introduced in a 2 L three-neck flask provided with a stirrer, a thermometer, a reflux condenser, and a nitrogen gas introduction tube, and was heated to 80°C. While the temperature inside a reaction vessel was maintained at 80°C, a mixed solution consisting of 89.3 g of methyl methacrylate, 119.01 g of isobornyl methacrylate, 59.50 g of hydroxyethyl methacrylate, 29.75 g of methacrylic acid, methyl ethyl ketone 44 g, and 1.32 g of "V-601" (manufactured by Wako Pure Chemical Industries Ltd.) was added dropwise into the reaction vessel at a constant rate such that the dropwise addition was completed in 2 hours. After completing the dropwise addition, stirring was continued for one hour while the temperature inside the reaction vessel was maintained to 80°C.

Subsequently, a solution consisting of 0.60 g of "V-601" and 5.0 g of methyl ethyl ketone was added to this reaction vessel, and stirred for 2 hours. This step was repeated 4 times. Thereafter, a solution consisting of 0.60 g of "V-601 " and 5.0 g of methyl ethyl ketone was added and stirred for 3 hours to obtain a copolymer solution.

<Phase-transfer emulsification method>

163.52 g of the above-described copolymer solution was weighed, and 105 g of isopropanol, 1.0 g of 20% maleic acid aqueous solution, and 20.7 ml of 2 mol/L NaOH aqueous solution were added thereto, and the temperature inside the reaction vessel was increased to 80°C. Next, 194 g of distilled water was added dropwise into this reaction vessel at a rate of 20 ml/min to be dispersed in water. Thereafter, under atmospheric pressure, the temperature inside the reaction vessel was maintained to 80°C for 2 hours, then the temperature inside the reaction vessel was maintained to 85°C for 2 hours, and furthermore the temperature inside the reaction vessel was maintained to 90°C for 2 hours, whereby the solvent was distilled away. Then, the pressure inside the reaction vessel was reduced to distill away isopropanol, methyl ethyl ketone, and distilled water to obtain an aqueous dispersion of self-dispersing resin fine particles having a concentration of solid contents of 25.0%. All of isopropanol and methyl ethyl ketone were distilled away by this pressure reduction operation.

The monomers shown in Table below were used in terms of mass ratios shown in Table below, and an amount of the initiator or maleic acid was adjusted appropriately to obtain an aqueous dispersion of the self-dispersing resin fine particles having a concentration of solid contents of 25.0% as in the same production of the above-described resin fine particles.

All of the resins constituting the resin fine particles synthesized in the present example were in a range of a weight-average molecular weight of 30000 to 150000. In addition, in the aqueous dispersion of the resin fine particles, a volume average particle size of the resin fine particles was measured by Microtrac UPA EX-150 (manufactured by Nikkiso Co., Ltd.), and as a result, all of the resultants were within a range of 1 to 45 nm.

[Examples and Comparative Examples] Production of aqueous ink composition

<Production of black ink K-01>

- Synthesis of water-insoluble polymeric dispersant -

In a reaction vessel, a mixed solution consisting of 6 parts of styrene, 11 parts of stearyl methacrylate, 4 parts of styrene macromer AS-6 (manufactured by TOAGOSEI CO., LTD.), 5 parts of BLEMMER PP-500 (manufactured by Nippon Oil & Fat Corporation), 5 parts of methacrylic acid, 0.05 parts of 2-mercaptoethanol, and 24 parts of methyl ethyl ketone was produced.

On the other hand, a mixed solution consisting of 14 parts of styrene, 24 parts of stearyl methacrylate, 9 parts of styrene macromer AS-6 (manufactured by TOAGOSEI CO., LTD.), 9 parts of BLEMMER PP-500 (manufactured by Nippon Oil & Fat Corporation), 10 parts of methacrylic acid, 0.13 parts of 2-mercaptoethanol, 56 parts of methyl ethyl ketone, and 1.2 parts of 2,2'-azobis(2,4-dimethylvaleronitrile) was produced and then placed in a dropwise addition funnel.

Subsequently, in a nitrogen atmosphere, the mixed solution in the reaction vessel was heated to 75°C while stirring, and the mixed solution in the dropwise addition funnel was gradually added dropwise into the reaction vessel over one hour. Two hours after the completion of the dropwise addition, a solution in which 1.2 parts of 2,2'-azobis(2,4-dimethylvaleronitrile) was dissolved in 12 parts of methyl ethyl ketone was added dropwise into the reaction vessel over 3 hours. The mixed solution was further aged at 75°C for 2 hours and then at 80°C for 2 hours. As a result, methyl ethyl ketone of the water-insoluble polymeric dispersant was obtained.

A part of the obtained water-insoluble polymeric dispersant solution was isolated by removing the solvent, and the obtained solid content was diluted with tetrahydrofuran to 0.1% by mass, and the weight-average molecular weight was measured by GPC. As a result, the isolated solid content had a weight-average molecular weight of 25,000.

- Preparation of black pigment dispersion liquid -

5.0 g expressed in terms of solid contents of the obtained water-insoluble polymeric dispersant solution, 10.0 g of pigment dispersion CAB-O-JETTM 200 (carbon black, manufactured by Cabot Corporation), 40.0 g of methyl ethyl ketone, 8.0 g of 1 mol/L sodium hydroxide, 82.0 g of ion exchange water, and 300 g of 0.1 mm zirconia beads were fed in a vessel, followed by dispersing at 1000 rpm for 6 hours by use of a ready mill dispersing machine (manufactured by Aimex Co., Ltd.). The obtained dispersion liquid was subjected to the reduced pressure condensation with an evaporator until methyl ethyl ketone was sufficiently distilled away. The pigment concentration was adjusted to 10% to obtain a black pigment dispersion liquid BK-1 as dispersion liquid of colored particles consisting of a pigment whose surface was coated with a water-insoluble polymeric dispersant.

An ink composition was prepared using the above-described black pigment dispersion liquid BK-1, the aqueous dispersion of the resin fine particles produced above, and a mixed solution of water as an aqueous medium and a water-soluble organic solvent shown in Table below. After the preparation, coarse particles were removed with a 1 μm filter, and thus black ink K-01 which is an aqueous ink composition was produced. The water contained in the black pigment dispersion liquid and the water contained in the aqueous dispersion of the resin fine particles both constitute water in the aqueous ink composition.

The ink composition of the black ink K-01 is as follows.

| | |
|---|---|
| · BK-1 (expressed in terms of solid contents) | 4.5% |
| · Aqueous dispersion of resin fine particles (expressed in terms of solid contents) | 8% |
| · OLFINE E1010 (Nissin Chemical co., ltd.) | 1% |
| · Aqueous medium amount to make up | 100% in total |

<Production of black inks K-02 to K-31 and KC-01 to KC-03>

Black inks K-02 to K-31 and KC-01 to KC-03 which are aqueous ink compositions were respectively produced in the same manner as in the production of the black ink K-01, except that the resin fine particles and the aqueous medium used in the production of the black ink 01 were changed as indicated in the following Tables.

<Production of treatment liquid>

Various components were mixed at the mixing composition described below, and an acid treatment liquid (acid treatment agent) was obtained.

The physical properties of the acid treatment liquid thus obtained were a viscosity of 4.2 mPa·s (25°C), a surface tension of 40.8 mN/m (25°C), and pH 0.1 (25°C).

Here, the viscosity, surface tension and pH were respectively measured using a VISCOMETER TV-22 (manufactured by Toki Sangyo Co., Ltd.), an Automatic Surface Tensiometer CBVP-Z (manufactured by Kyowa Interface Science Co., Ltd.), and a pH meter WM-50EG (manufactured by DKK-Toa Corporation).

<Composition of treatment liquid>

| | |
|---|---|
| ·TPGmME (tripropylene glycol monomethyl ether) | 4.8% |
| ·DEGmBE (diethylene glycol monobutyl ether | 4.8% |
| ·Malonic acid | 16.0% |
| ·Malic acid | 7.8% |
| ·Propanetricarboxylic acid | 3.5% |
| ·Phosphoric acid 85% by mass aqueous solution | 15.0% |
| · Anti-foaming agent (TSA-739 (15%) manufactured by Momentive Performance Materials Japan LLC; emulsion type silicone anti-foaming agent) | 0.07% |
| · Ion exchange water amount to make up | 100% in total |

[Test Example]

With respect to each of the black inks produced above (hereinafter, simply referred to as "ink"), maintenance properties, drying properties, and rub resistance were evaluated as follows.

<Maintenance properties>

10 μL of the produced ink in the above Examples and Comparative Examples was added dropwise on a slide glass. The slide glass was allowed to leave it to stand at room temperature and under normal pressure for 24 hours to dry the ink. 1 mL of water was added dropwise on the solid residue (ink component) obtained by drying, and the mixture was allowed to leave it to stand at room temperature for 10 minutes. The solubility or dispersibility of solid residue in water was evaluated based on the following evaluation standard.

(Evaluation standard of maintenance properties)

A: Solid residue was completely dissolved or dispersed in water, and no undissolved residue was confirmed on the slide glass.
B: Solid residue was remained on the slide glass, and the amount of the residues was less than 30% with respect to the solids before water dropwise addition.
C: Solid residue was remained on the slide glass, and the amount of the residue was 30% or more and less than 60% with respect to the solids before water dropwise addition.
D: Solid residue was remained on the slide glass, and the amount of the residue was 60% or more with respect to the solid residue before water dropwise addition.

Values of % in the evaluation standard are based on an area. That is, the value of % is a proportion of an area of the residue remaining on the slide glass in a case in which the area of the solid residue existing region before water dropwise addition (a projected area of the slide glass in a direction perpendicular to a surface on which the ink was added dropwise) is 100%.
The results are presented in the following Table.

<Drying properties>

FE2001 (polyethylene terephthalate (PET) recording medium, manufactured by FUTAMURA CHEMICAL CO., LTD.) was fixed on a stage operating at 500 mm/sec. Subsequently, a black-colored solid image was formed on the above-described recording medium using each black ink by a line method under the jetting conditions of a resolution of 1200 × 1200 dpi and a jetting amount of 3.5 pL, by using a GELJET GX5000 printer head manufactured by Ricoh Co., Ltd., which was arranged obliquely to the scan direction and fixed. The mass of the recording medium having an image area was weighed using an electronic balance. Subsequently, the recording medium was mounted on a hot plate at 60°C, with the image-formed surface facing upward, and the image was dried for 10 seconds with hot air at 120°C using a dryer. Thereafter, the mass of the recording medium having the image area was weighed again. Based on a difference in the mass of the recording medium before and after drying, a residual ratio of the aqueous solvent was calculated by the following expression.

Residual ratio (%) of aqueous medium = 100 × {x - [mass of recording medium before drying - mass of recording medium after drying]}/x

x: [mass of recording medium before drying - mass of recording medium after completely drying]
"After completely drying": After the recording medium was placed on a hot plate of 60°C, with the image-formed surface facing upward, dried with hot air at 120°C for 30 seconds using a dryer, and dried at room temperature and under normal pressure for 24 hours.

The obtained residual ratio was applied to the following evaluation standard to evaluate the drying properties.

(Evaluation standard of drying properties)

A: The residual ratio of the aqueous medium was less than 5%.
B: The residual ratio of the aqueous medium was 5% or more and less than 10%.
C: The residual ratio of the aqueous medium was 10% or more and less than 15%.
D: The residual ratio of the aqueous medium was 15% or more.

The results are presented in the following Table.

<Rub resistance>

FE2001 (PET recording medium, manufactured by FUTAMURA CHEMICAL CO.. LTD.) was fixed on a stage operating at 500 mm/sec. The treatment liquid produced above was applied onto this recording medium with a wire bar coater to a coating amount of about 1.7 $g/m^2$, and immediately thereafter, the resultant was dried at 50°C for 2 seconds. Thereafter, a black-colored solid image was formed on a treatment liquid applied surface of the above-described recording medium using each black ink by a line method under the jetting conditions of a resolution of 1200 × 1200 dpi and a jetting amount of 3.5 pL, with a GELJET GX5000 printer head manufactured by Ricoh Co., Ltd., which was arranged obliquely to the scan direction and fixed. Immediately after forming the image, the image was mounted on a hot plate at 60°C, with the image-formed surface facing upward, and the image was dried for 10 seconds with hot air at 120°C using a dryer.

Unprinted FE2001 (PET recording medium, manufactured by FUTAMURA CHEMICAL CO., LTD.) was wrapped around a paperweight (weight: 470 g, size: 15 mm × 30 mm × 120 mm) (the area where the imprinted recording medium and the evaluation sample are in contact was 150 $mm^2$), and the above image area was rubbed 10 round trips. After rubbing, the contact surface of the unprinted recording medium (rubbed medium) with the image area was visually observed, and the rub resistance was evaluated according to the following evaluation standard.

(Evaluation standard of rub resistance)

A: No color transfer of the image (coloring material) on the rubbed medium after being rubbed was visually recognized.
B: In the rubbed medium after being rubbed, faint color transfer was observed in less than 10% with respect to the area of the rubbed surface, but there was no problem in practical use.
C: In the rubbed medium after being rubbed, faint color transfer was observed in 10% or more with respect to the area of the rubbed surface, but there was no problem in practical use.
D: Image (coloring material) color transfer to the rubbed medium after being rubbed was dark (clearly visible), and there was a problem in practical use.

The results are presented in the following Table.

Table 3]

| Ink composition | Aqueous medium | | Resin constituting resin fine particles | | | | Mass ratio of constitutional unit | HSP distance* | Evaluation result | | |
|---|---|---|---|---|---|---|---|---|---|---|---|
| | Kind of water-soluble organic solvent | Proportion of water and water-soluble organic solvent occupied in aqueous medium (based on volume) | General Formula (1) or (2) (% by mass) (i) | General Formulae (A) to (E) (% by mass) (ii) | (Meth) acrylic acid (% by mass) | Methyl (meth) acrylate (% by mass) | (i):(ii) | | Maintenance properties | Drying properties | Rub resistance |
| K-01 | (I) | 22% of (I), 78% of water | a-1 (20%) | b-1 (40%) | c-1 (10%) | c-2 (30%) | 1:2 | 33.7 | A | A | A |
| K-02 | (I) | 45% of (I) 55% of water | a-1 (20%) | b-1 (40%) | c-1 (10%) | c-2 (30%) | 1:2 | 28.7 | A | C | C |
| K-03 | (I) | 35% of (I), 65% of water | a-1 (20%) | b-1 (40%) | c-1 (10%) | c-2 (30%) | 1:2 | 30 8 | A | B | B |
| K-04 | (I) | 10% of (I), 90% of water | a-1 (20%) | b-1 (40%) | c-1 (10%) | c-2 (30%) | 1:2 | 36.3 | B | A | A |
| K-05 | (I) | 1% of (I), 99% of water | a-1 (20%) | b-1 (40%) | c-1 (10%) | c-2 (30%) | 1.2 | 38.2 | C | A | A |
| K-06 | (III) | 30% of (III), 70% of water | a-1 (20%) | b-1 (40%) | c-1 (10%) | c-2 (30%) | 1:2 | 28.9 | A | C | C |
| K-07 | (III) | 15% of (III), 85% of water | a-1 (20%) | b-1 (40%) | c-1 (10%) | c-2 (30%) | 1:2 | 33.6 | A | A | A |
| K-08 | (III) | 5% of (III), 95% of water | a-I (20%) | b-1 (40%) | c-1 (10%) | c-2 (30%) | 1:2 | 36 8 | B | A | A |
| K-09 | (IV) | 25% of (IV), 75% of water | a-1 (20%) | b-1 (40%) | c-1 (10%) | c-2 (30%) | 1:2 | 30 7 | A | B | B |
| K-10 | (IV) | 15% of (IV), 85% of water | a-1 (20%) | b-1 (40%) | c-1 (10%) | c-2 (30%) | 1:2 | 33.8 | A | A | A |
| K-11 | (IV) | 3% of (IV), 97% of water | a-1 (20%) | b-1 (40%) | c-1 (10%) | c-2 (30%) | 1:2 | 37.5 | C | A | A |

(continued)

| Ink composition | Aqueous medium | | Resin constituting resin fine particles | | | | Mass ratio of constitutional unit | HSP distance* | Evaluation result | | |
|---|---|---|---|---|---|---|---|---|---|---|---|
| | Kind of water-soluble organic solvent | Proportion of water and water-soluble organic solvent occupied in aqueous medium (based on volume) | General Formula (1) or (2) (% by mass) (i) | General Formulae (A) to (E) (% by mass) (ii) | (Meth) acrylic acid (% by mass) | Methyl (meth) acrylate (% by mass) | (i):(ii) | | Maintenance properties | Drying properties | Rub resistance |
| K-12 | (I) | 22% of (I), 78% of water | a-1 (20%) | None (0%) | c-1 (10%) | c-2 (70%) | - | 33.8 | A | C | C |
| K-13 | (I) | 22% of (I), 78% of water | a-1 (20%) | b-1 (10%) | c-1 (10%) | c-2 (60%) | 2:1 | 33 8 | A | A | A |
| K-14 | (I) | 22% of (I) 78% of water | a-1 (8%) | b-1 (40%) | c-1 (10%) | c-2 (42%) | 1:5 | 34.9 | A | A | A |
| K-15 | (I) | 22% of (I), 78% of water | a-1 (20%) | b-1 (4%) | c-1 (10%) | c-2 (66%) | 5:1 | 33 8 | A | C | C |
| K-16 | (I) | 22% of (I), 78% of water | a-1 (4%) | b-1 (40%) | c-1 (10%) | c-2 (46%) | 1:10 | 35.3 | C | A | A |
| K-17 | (I) | 22% of (I), 78% of water | a-2 (20%) | b-1 (40%) | c-1 (10%) | c-2 (30%) | 1:2 | 34.3 | C | A | Λ |

* HSP distance between "Aqueous medium and "Resin constituting resin fine particle"

[Table 4]

| Ink composition | Aqueous medium | | Constitutional unit of resin constituting resin fine particle (monomer) | | | | Mass ratio of constitutional unit | HSP distance* | Evaluation result | | |
|---|---|---|---|---|---|---|---|---|---|---|---|
| | Kind of water-soluble organic solvent | Proportion of water and water-soluble organic solvent occupied in aqueous medium (based on volume) | General Formula (1) or (2) (% by mass) (i) | General Formulae (A) to (E) (% by mass) (ii) | (Meth) acrylic acid (% by mass) | Methyl (meth) acrylate (% by mass) | (i):(ii) | | Maintenance properties | Drying properties | Rub resistance |
| K-18 | (I) | 22% of (I), 78% of water | a-3 (20%) | b-1 (40%) | c-1 (10%) | c-2 (30%) | 1:2 | 35.3 | B | A | A |
| K-19 | (I) | 22% of (1), 78% of water | a-1 (20%) | b-2 (40%) | c-1 (10%) | c-2 (30%) | 1:2 | 34.9 | A | A | B |
| K-20 | (I) | 22% of (I), 78% of water | a-1 (20%) | b-3 (40%) | c-1 (10%) | c-2 (30%) | 1:2 | 33.5 | A | A | B |
| K-21 | (I) | 22% of (I), 78% of water | a-1 (20%) | b-4 (40%) | c-1 (10%) | c-2 (30%) | 1:2 | 33.8 | A | A | B |
| K-22 | (I) | 22% of (I), 78% of water | a-1 (20%) | b-1 (10%) | c-1 (40%) | c-2 (30%) | 2:1 | 30.8 | A | B | B |
| K-23 | (I) | 22% of (1), 78% of water | a-1 (8%) | b-1 (40%) | c-1 (0.5%) | c-2 (51.5%) | 1:5 | 36.1 | B | A | A |
| K-24 | (I) | 22% of (1), 78% of water | a-2 (20%) | b-1 (10%) | c-1 (40%) | c-2 (30%) | 2:1 | 30.5 | A | B | B |
| K-25 | (I) | 22% of (1), 78% of water | a-2 (3%) | b-1 (15%) | None (0%) | c-2 (82%) | 1:5 | 36.1 | B | A | A |
| K-26 | (I) | 22% of (I), 78% of water | a-4 (30%) | b-1 (25%) | c-1 (10%) | c-2 (35%) | 1.2:1 | 31.9 | A | A | A |
| K-27 | (I) | 22% of (1), 78% of water | a-4 (20%) | b-1 (10%) | c-1 (40%) | c-2 (30%) | 2.1 | 30.3 | A | B | B |
| K-28 | (I) | 22% of (1), 78% of water | a-4 (3%) | b-1 (15%) | None (0%) | c-2 (82%) | 1:5 | 36.1 | B | A | A |

(continued)

| Ink composition | Aqueous medium | | Constitutional unit of resin constituting resin fine particle (monomer) | | | | Mass ratio of constitutional unit | HSP distance* | Evaluation result | | |
|---|---|---|---|---|---|---|---|---|---|---|---|
| | Kind of water-soluble organic solvent | Proportion of water and water-soluble organic solvent occupied in aqueous medium (based on volume) | General Formula (1) or (2) (% by mass) (i) | General Formulae (A) to (E) (% by mass) (ii) | (Meth) acrylic acid (% by mass) | Methyl (meth) acrylate (% by mass) | (i):(ii) | | Maintenance properties | Drying properties | Rub resistance |
| K-29 | (I) | 22% of (1), 78% of water | a-1 (20%) | b-5 (40%) | c-1 (10%) | c-2 (30%) | 1:2 | 33.8 | A | A | A |
| K-30 | (I) | 22% of (1), 78% of water | a-1 (20%) | b-5 (10%) | c-1 (40%) | c-2 (30%) | 2:1 | 30.8 | A | B | B |
| K-31 | (I) | 22% of (I), 78% of water | a-1 (3%) | b-5 (15%) | None (0%) | c-2 (82%) | 1:5 | 36.2 | B | A | A |
| KC-01 | (II) | 22% of (I), 78% of water | a-1 (20%) | b-1 (40%) | c-1 (10%) | c-2 (30%) | 1:2 | 32.8 | A | D | D |
| KC-02 | (I) (II) | 11% of (1), 11% of (II), 78% of water | a-1 (20%) | b-1 (40%) | c-1 (10%) | c-2 (30%) | 1:2 | 332 | A | D | D |
| KC-03 | (I) | 22% of (1), 78% of water | None (0%) | b-1 (60%) | c-1 (10%) | c-2 (30%) | - | 35.6 | D | A | A |

* HSP distance between "Aqueous medium" and "Resin constituting resin fine particle"

The correspondence between the reference symbols in the above Tables and the compounds is shown below.

Water-soluble organic solvent

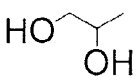

(I) Propylene glycol
Boiling point of 188°C

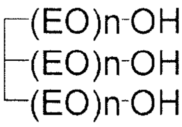

(II) SANNIX GP-250 (manufactured by SANYO CHEMICAL INDUSTRIES, LTD.)
Boiling point of 250°C (boiling point of 209°C to 237°C (0. 4mmHg)) or higher

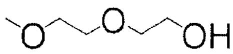

(III) Diethylene glycol monoethyl ether
Boiling point of 193°C

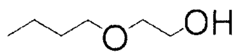

(IV) Ethylene glycol monobutyl ether
Boiling point of 171°C

Monomer deriving General Formula (1) or General Formula (2)

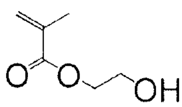

a-1
2-hydroxyethyl methacrylate

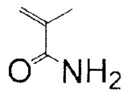

a-2
Methacrylamide

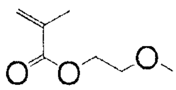

a-3
2-methoxyethyl methacrylate

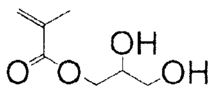

a-4
Glycerin monomethacrylate

Monomer deriving General Formulae (A) to (E)

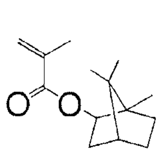

b-1
Isobornyl methacrylate

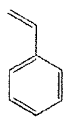

b-2
Styrene

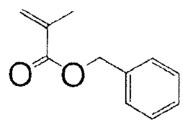

b-3
Benzyl methacrylate

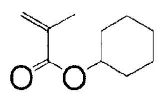

b-4
Cyclohexyl methacrylate

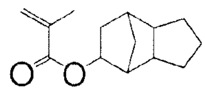

b-5
Dicyclopentanyl methacrylate

Monomer deriving other constitutional units

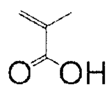

c-1
Methacrylic acid

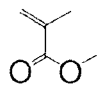

c-2
Methacrylate

As shown in the above Tables, in a case in which in the aqueous medium contained in the aqueous ink composition, a proportion of the aqueous medium which has a boiling point of 250°C or higher was higher than the proportion of the aqueous medium specified in the invention, the drying properties were deteriorated, and it was resulted that the rub resistance was deteriorated (KC-01 and KC-02). In addition, in a case in which the resin fine particles contained in the aqueous ink composition did not contain the constitutional unit represented by General Formula (1) or (2), the solid residue remaining after drying was difficult to redissolve even though water was brought into contact with the solid residue, and it was resulted that the maintenance properties were deteriorated (KC-03).

On the other hand, the aqueous ink composition satisfying the specifications of the invention was excellent in all the evaluation results of maintenance properties, drying properties, and rub resistance (K-01 to K-31). In addition, it was also found that even in K-01 to K-31, in a case in which the HSP distance between the aqueous medium and the resin constituting the resin fine particle was in the range of 31.0 or more and 36.0 or less, all properties of the maintenance properties, the drying properties, and the rub resistance was enhanced.

## Claims

**1.** An aqueous ink composition comprising:

at least an aqueous medium and resin fine particles,
wherein a proportion of a water-soluble organic solvent occupied in the aqueous medium, which is a high-boiling solvent, which has a boiling point of 250°C or higher, is 3% by mass or less, and a boiling point of a water-soluble organic solvent other than the high-boiling solvent, which is included in the aqueous medium, is lower than 230°C, and
a resin constituting the resin fine particle contains at least one kind of constitutional units represented by General Formula (1) or (2),

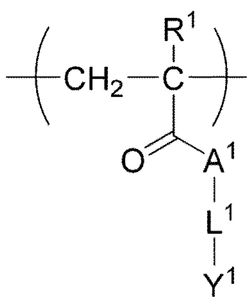

General Formula (1)

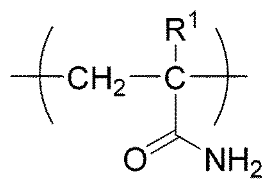

General Formula (2)

in the formulae, $R^1$ represents a hydrogen atom or an alkyl group having 1 to 4 carbon atoms,
$A^1$ represents -O-, -NH-, or $-N(L^2-Y^2)-$,
$L^1$ represents an alkylene group, an alkenylene group, an alkynylene group, a group selected from -O-, -NH-, $-N(L^2-Y^2)-$, and -C(=O)-, or a divalent group formed by combining two or more kinds of these groups,
$Y^1$ represents -OH, $-OR^2$, $-NH_2$, $-NR^2H$, $-NR^2R^3$, -SH, $-S(=O)_2OM$, or $-OP(=O)(OM)_2$, where, $R^2$ and $R^3$ each represent an alkyl group, an alkenyl group, or an alkynyl group, M represents a hydrogen atom, an alkali metal ion, or an ammonium ion,
$L^2$ represents an alkylene group, an alkenylene group, an alkynylene group, a group selected from -O-, -NH-, and -C(=O)-, or a divalent group formed by combining two or more kinds of these groups, and
$Y^2$ has the same definition as $Y^1$, and at least one kind of constitutional units represented by any one of General Formulae (A) to (E),

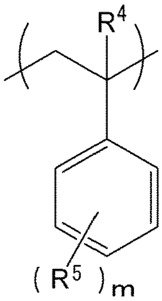
General Formula (A)

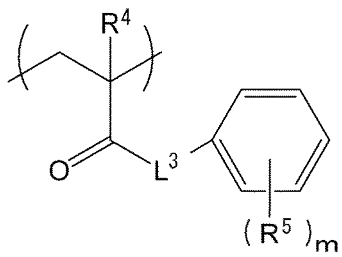
General Formula (B)

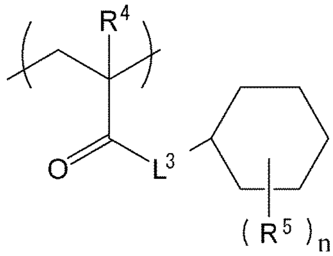
General Formula (C)

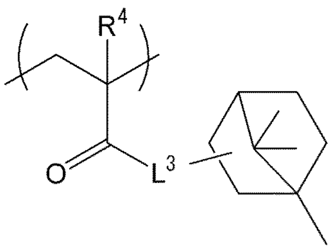
General Formula (D)

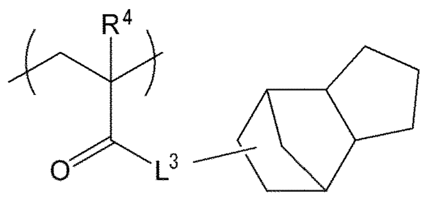
General Formula (E)

in the formulae, $R^4$ represents a hydrogen atom or methyl, $R^5$ represents an alkyl group, an alkenyl group, or an alkynyl group, m is an integer of 0 to 5, and n is an integer of 0 to 11, and $L^3$ represents a single bond, or an alkylene group having 1 to 18 carbon atoms, an arylene group having 6 to 18 carbon atoms, a group selected from -O-, -NH-, -S-, and -C(=O)-, or a divalent group formed by combining two or more kinds of these groups, and the water-soluble organic solvent having a boiling point of lower than 230°C includes: a single or a combination of two or more kinds of the group consisting of alkanediols, which are polyhydric alcohols, sugar alcohols, alkyl alcohols having 1 to 4 carbon atoms, and glycol ethers.

2. The aqueous ink composition according to claim 1, wherein in the resin constituting the resin fine particle, a ratio of a total content (i) of constitutional units represented by General Formula (1) or (2) to a total content (ii) of the constitutional units represented by General Formulae (A) to (E) is (i):(ii) = 2:1 to 1:5 in terms of mass ratio.

3. The aqueous ink composition according to claim 1 or 2, wherein the resin constituting the resin fine particle contains at least one kind of constitutional units represented by General Formula (D) or (E).

4. The aqueous ink composition according to any one of claims 1 to 3, wherein the resin constituting the resin fine particle contains at least one kind of constitutional units represented by General Formula (1).

5. The aqueous ink composition according to claim 4, wherein $Y^1$ in General Formula (1) is - OH, $-NH_2$, $-NR^2H$, or $-NR^2R^3$.

6. The aqueous ink composition according to any one of claims 1 to 5, wherein a HSP distance between the aqueous

medium and the resin constituting the resin fine particle is 31.0 or more and 36.0 or less.

7. The aqueous ink composition according to any one of claims 1 to 6, which is used for an inkjet recording method.

8. The aqueous ink composition according to any one of claims 1 to 7, wherein a boiling point of the water-soluble organic solvent, which is included in the aqueous medium, is lower than 220°C.

9. The aqueous ink composition according to claim 8, wherein a boiling point of the water-soluble organic solvent, which is included in the aqueous medium, is lower than 210°C.

10. The aqueous ink composition according to any one of claims 1 to 9, further comprising a colorant.

11. An ink set comprising:

the aqueous ink composition according to claim 10; and
a treatment agent for causing a colorant in the aqueous ink composition to be aggregated.

12. An image-forming method using the aqueous ink composition according to claim 10.

13. An image-forming method comprising:

a treatment agent application step of applying the treatment agent for causing the colorant in the aqueous ink composition according to claim 10 to be aggregated onto a recording medium;
an ink application step of applying the aqueous ink composition according to claim 10 onto the recording medium after being subjected to the treating agent applying step, thereby forming an image.

14. The image-forming method according to claim 13, wherein the recording medium is a low-permeable recording medium or a non-permeable recording medium.

15. The image-forming method according to claim 13 or 14, wherein the ink application step is a step of applying, by an inkjet method, the aqueous ink composition according to claim 9 onto the recording medium after being subjected to the treating agent applying step, thereby forming an image.

## Patentansprüche

1. Wässrige Tintenzusammensetzung, umfassend:

mindestens ein wässriges Medium und feine Harzpartikel,
wobei ein Anteil eines wasserlöslichen organischen Lösungsmittels, das in dem wässrigen Medium enthalten ist, welches ein hochsiedendes Lösungsmittel ist, das einen Siedepunkt von 250°C oder höher hat, 3 Masse% oder weniger beträgt, und ein Siedepunkt eines anderen wasserlöslichen organischen Lösungsmittels als das hochsiedende Lösungsmittel, das in dem wässrigen Medium enthalten ist, niedriger als 230°C ist, und
ein Harz, das den feinen Harzpartikel bildet, mindestens eine Art von konstitutionellen Einheiten enthält, die durch die allgemeine Formel (1) oder (2) dargestellt werden,

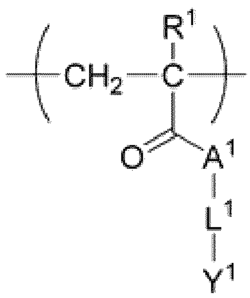

Allgemeine Formel (1)

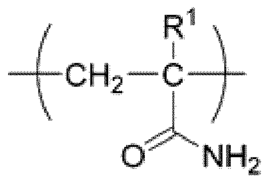

Allgemeine Formel (2)

wobei in den Formeln $R^1$ ein Wasserstoffatom oder eine Alkylgruppe mit 1 bis 4 Kohlenstoffatomen darstellt, $A^1$ -O-, -NH- oder $-N(L^2-Y^2)-$ darstellt,

$L^1$ eine Alkylengruppe, eine Alkenylengruppe, eine Alkinylengruppe, eine Gruppe, ausgewählt aus -O-, -NH-, $-N(L^2-Y^2)-$ und -C(=O)-, oder eine divalente Gruppe, die durch Kombination von zwei oder mehr Arten dieser Gruppen gebildet wird, darstellt,

$Y^1$ -OH, $-OR_2$, $-NH_2$, $-NR_2H$, $-NR_2R_3$, -SH, $-S(=O)_2OM$ oder $-OP(=O)(OM)_2$ darstellt, wobei $R_2$ und $R_3$ jeweils eine Alkylgruppe, eine Alkenylgruppe oder eine Alkinylgruppe darstellen, M ein Wasserstoffatom, ein Alkalimetallion oder ein Ammoniumion darstellt,

$L^2$ eine Alkylengruppe, eine Alkenylengruppe, eine Alkinylengruppe, eine Gruppe, ausgewählt aus -O-, -NH- und -C(=O)-, oder eine divalente Gruppe, die durch Kombination von zwei oder mehr Arten dieser Gruppen gebildet wird, darstellt, und

$Y^2$ die gleiche Definition wie $Y^1$ hat, und mindestens eine Art von konstitutionellen Einheiten, durch eine der allgemeinen Formeln (A) bis (E) dargestellt wird,

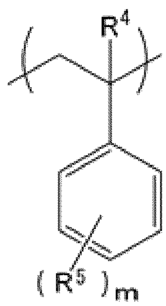

Allgemeine Formel (A)

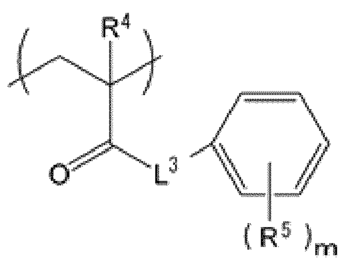

Allgemeine Formel (B)

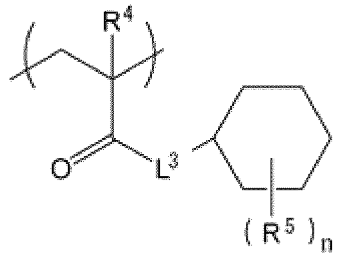

Allgemeine Formel (C)

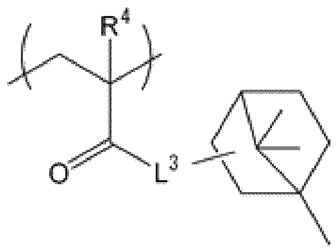

Allgemeine Formel (D)

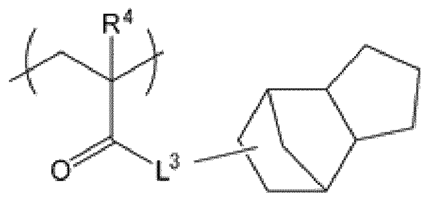

Allgemeine Formel (E)

wobei in den Formeln $R^4$ ein Wasserstoffatom oder Methyl darstellt, $R^5$ eine Alkylgruppe, eine Alkenylgruppe oder eine Alkinylgruppe darstellt, m eine ganze Zahl von 0 bis 5 ist und n eine ganze Zahl von 0 bis 11 ist, und $L^3$ eine Einfachbindung oder eine Alkylengruppe mit 1 bis 18 Kohlenstoffatomen, eine Arylengruppe mit 6 bis 18 Kohlenstoffatomen, eine Gruppe ausgewählt aus -O-, -NH-, -S-, und -C(=O)-, oder einer divalente Gruppe darstellt, die durch Kombination von zwei oder mehr Arten dieser Gruppen gebildet wird, und

das wasserlösliche organische Lösungsmittel mit einem Siedepunkt von weniger als 230°C umfasst: eine einzelne oder eine Kombination von zwei oder mehreren Arten aus der Gruppe bestehend aus Alkandiolen, die mehrwertige Alkohole sind, Zuckeralkoholen, Alkylalkoholen mit 1 bis 4 Kohlenstoffatomen und Glykolethern.

**2.** Wässrige Tintenzusammensetzung nach Anspruch 1, wobei in dem Harz, das den feinen Harzpartikel bildet, ein Verhältnis eines Gesamtgehalts (i) an konstitutionellen Einheiten, die durch die allgemeine Formel (1) oder (2) dargestellt werden, zu einem Gesamtgehalt (ii) der konstitutionellen Einheiten, die durch die allgemeinen Formeln (A) bis (E) dargestellt werden, (i):(ii) = 2:1 bis 1:5 in Bezug auf ein Massenverhältnis ist.

**3.** Wässrige Tintenzusammensetzung nach Anspruch 1 oder 2, wobei das Harz, das den feinen Harzpartikel bildet, mindestens eine Art von konstitutionellen Einheiten der allgemeinen Formel (D) oder (E) enthält.

**4.** Wässrige Tintenzusammensetzung nach einem der Ansprüche 1 bis 3, wobei das Harz, aus dem der feine Harzpartikel besteht, mindestens eine Art von konstitutionellen Einheiten enthält, die durch die allgemeine Formel (1) dargestellt werden.

**5.** Wässrige Tintenzusammensetzung nach Anspruch 4, wobei $Y^1$ in der allgemeinen Formel (1) -OH, $-NH_2$, $-NR^2H$ oder $-NR^2R^3$ ist.

**6.** Wässrige Tintenzusammensetzung nach einem der Ansprüche 1 bis 5, wobei ein HSP-Abstand zwischen dem wässrigen Medium und dem Harz, das den feinen Harzpartikel bildet, 31,0 oder mehr und 36,0 oder weniger beträgt.

**7.** Die wässrige Tintenzusammensetzung nach einem der Ansprüche 1 bis 6, die für ein Tintenstrahlaufzeichnungsverfahren verwendet wird.

**8.** Wässrige Tintenzusammensetzung nach einem der Ansprüche 1 bis 7, wobei ein Siedepunkt des wasserlöslichen organischen Lösungsmittels, das in dem wässrigen Medium enthalten ist, niedriger ist als 220°C.

**9.** Wässrige Tintenzusammensetzung nach Anspruch 8, wobei der Siedepunkt des wasserlöslichen organischen Lösungsmittels, das in dem wässrigen Medium enthalten ist, niedriger als 210°C ist.

**10.** Wässrige Tintenzusammensetzung nach einem der Ansprüche 1 bis 9, die außerdem ein Farbmittel enthält.

**11.** Tintenset, umfassend:

die wässrige Tintenzusammensetzung nach Anspruch 10; und
ein Behandlungsmittel, das bewirkt, dass ein Farbstoff in der wässrigen Tintenzusammensetzung aggregiert wird.

**12.** Bilderzeugungsverfahren verwendend die wässrige Tintenzusammensetzung nach Anspruch 10.

**13.** Bilderzeugungsverfahren, umfassend:

einen Behandlungsmittel-Aufbringungsschritt des Aufbringens des Behandlungsmittels, um zu bewirken, dass der Farbstoff in der wässrigen Tintenzusammensetzung nach Anspruch 10 auf einem Aufzeichnungsmedium aggregiert wird;
einen Tinten-Aufbringungsschritt des Aufbringens der wässrigen Tintenzusammensetzung nach Anspruch 10 auf das Aufzeichnungsmedium, nachdem sie dem Behandlungsmittel-Aufbringungsschritt unterzogen wurde, wodurch ein Bild erzeugt wird.

**14.** Bilderzeugungsverfahren nach Anspruch 13, wobei das Aufzeichnungsmedium ein niedrigpermeables Aufzeichnungsmedium oder ein nichtpermeables Aufzeichnungsmedium ist.

**15.** Bilderzeugungsverfahren nach Anspruch 13 oder 14, wobei der Tinten-Aufbringungsschritt ein Schritt des Aufbringens der wässrigen Tintenzusammensetzung nach Anspruch 9 auf das Aufzeichnungsmedium durch ein Tintenstrahlverfahren ist, nachdem es dem Schritt des Aufbringens eines Behandlungsmittels unterzogen wurde, wodurch ein Bild erzeugt wird.

## Revendications

**1.** Composition d’encre aqueuse, comprenant :

au moins un milieu aqueux et des particules fines de résine,
dans laquelle une proportion d’un solvant organique soluble dans l’eau occupée dans le milieu aqueux, lequel est un solvant à haut point d’ébullition, lequel présente un point d’ébullition supérieur ou égal à 250 °C, est inférieure ou égale à 3 % en masse, et un point d’ébullition d’un solvant organique soluble dans l’eau autre que le solvant à haut point d’ébullition, lequel est inclus dans le milieu aqueux, est inférieur à 230 °C, et
une résine constituant la particule fine de résine contient au moins un type d’unités constitutives représentées par la Formule générale (1) ou (2),

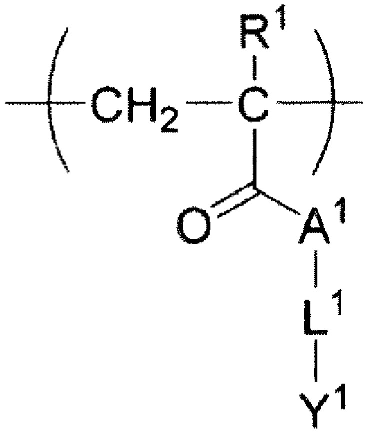

Formule générale (1)

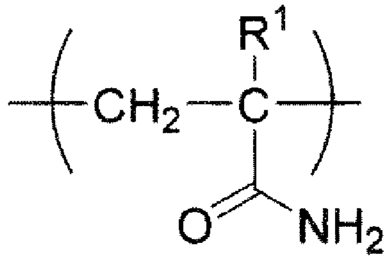

Formule générale (2)

dans les formules, $R^1$ représente un atome d'hydrogène ou un groupe alkyle présentant de 1 à 4 atomes de carbone ;
$A^1$ représente -O-, -NH-, ou -N($L^2$-$Y^2$)- ;
$L^1$ représente un groupe alkylène, un groupe alcénylène, un groupe alcynylène, un groupe sélectionné parmi -O-, -NH-, ou -N($L^2$-$Y^2$)-, et -C(=O)-, ou un groupe divalent formé en combinant deux types de ces groupes ou davantage ;
$Y^1$ représente -OH, -$OR^2$, -$NH_2$, -$NR^2H$, -$NR^2R^3$, -SH, -S(=O)$_2$OM, ou - OP(=O)(OM)$_2$, où $R^2$ et $R^3$ représentent chacun un groupe alkyle, un groupe alcényle, ou un groupe alcynyle ; M représente un atome d'hydrogène, un ion métallique alcalin, ou un ion ammonium ;
$L^2$ représente un groupe alkylène, un groupe alcénylène, un groupe alcynylène, un groupe sélectionné parmi -O-, et -C(=O)-, ou un groupe divalent formé en combinant deux types de ces groupes ou davantage, et
$Y^2$ représente la même définition que $Y^1$, et au moins un type d'unités constitutives représentées par l'une quelconque des Formules générales (A) à (E)

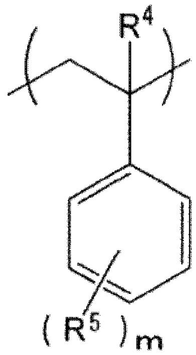

Formule générale (A)

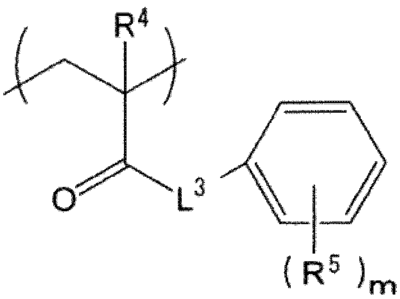

Formule générale (B)

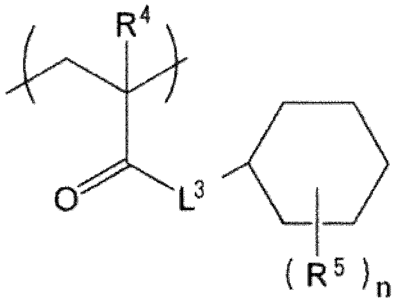

Formule générale (C)

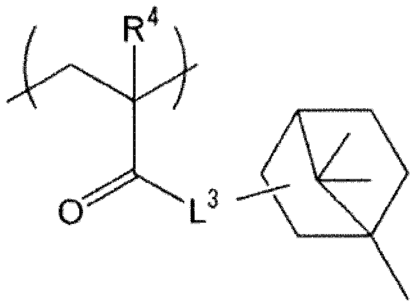

Formule générale (D)

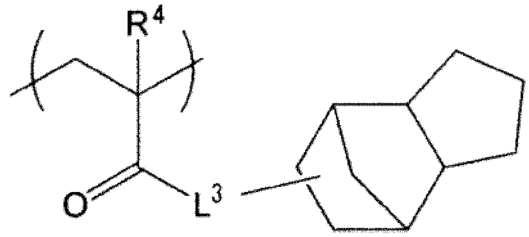

Formule générale (E)

dans les formules, $R^4$ représente un atome d'hydrogène ou un groupe méthyle ; $R^5$ représente alkyle, un groupe alcényle, ou un groupe alcynyle ; m est un entier allant de 0 à 5 ; n est un entier allant de 0 à 11, et $L^3$ représente une liaison simple, ou un groupe alkylène présentant de 1 à 18 atomes de carbone, un groupe arylène présentant de 6 à 18 atomes de carbone, un groupe sélectionné parmi -O-, -NH-, ou -S-, et -C(=O)-, ou un groupe divalent formé en combinant deux types de ces groupes ou davantage, et

le solvant organique soluble dans l'eau présentant un point d'ébullition inférieur à 230 °C inclut : un seul type ou une combinaison de deux types d'éléments ou davantage parmi le groupe consistant en des alcanediols, lesquels sont des polyols, des polysaccharides, des alcools alkyliques présentant de 1 à 4 atomes de carbone, et des éthers de glycol.

2. Composition d'encre aqueuse selon la revendication 1, dans laquelle dans la résine constituant la particule fine de résine, un rapport entre une teneur totale (i) d'unités constitutives représentées par les Formules générales (1) ou (2) et une teneur totale (ii) d'unités constitutives représentées par les Formules générales (A) à (E) est (i) : (ii) = 2 : 1 à 1 : 5, en termes de rapport de masse.

3. Composition d'encre aqueuse selon la revendication 1 ou 2, dans laquelle la résine constituant la particule fine de résine contient au moins un type d'unité constitutives représentées par les Formules générales (D) ou (E).

4. Composition d'encre aqueuse selon l'une quelconque des revendications 1 à 3, dans laquelle la résine constituant la particule fine de résine contient au moins un type d'unités constitutives représentées par la Formule générale (1).

5. Composition d'encre aqueuse selon la revendication 4, dans laquelle $Y^1$ dans la Formule générale (1) est -OH, $-NH_2$, $-NR^2H$, ou $-NR^2R^3$.

6. Composition d'encre aqueuse selon l'une quelconque des revendications 1 à 5, dans laquelle une distance HSP entre le milieu aqueux et la résine constituant la particule fine de résine est supérieure ou égale à 31,0, et inférieure ou égale à 36,0.

7. Composition d'encre aqueuse selon l'une quelconque des revendications 1 à 6, laquelle est utilisée pour un procédé d'enregistrement par jet d'encre.

8. Composition d'encre aqueuse selon l'une quelconque des revendications 1 à 7, dans laquelle un point d'ébullition du solvant organique soluble dans l'eau, lequel est inclus dans le milieu aqueux, est inférieur à 220 °C.

9. Composition d'encre aqueuse selon la revendication 8, dans laquelle un point d'ébullition du solvant organique soluble dans l'eau, lequel est inclus dans le milieu aqueux, est inférieur à 210 °C.

10. Composition d'encre aqueuse selon l'une quelconque des revendications 1 à 9, comprenant en outre un colorant.

11. Jeu d'encres, comprenant :

la composition d'encre aqueuse selon la revendication 10, et
un agent de traitement destiné à provoquer l'agrégation d'un colorant dans la composition d'encre aqueuse.

12. Procédé de formation d'image utilisant la composition d'encre aqueuse selon la revendication 10.

**13.** Procédé de formation d'image, comprenant les étapes suivantes :

une étape d'application d'agent de traitement pour appliquer l'agent de traitement pour provoquer l'agrégation du colorant dans la composition d'encre aqueuse selon la revendication 10 sur un support d'enregistrement ;
une étape d'application d'encre pour appliquer la composition d'encre aqueuse selon la revendication 10 sur le support d'enregistrement après l'avoir soumis à l'étape d'application d'agent de traitement, formant ainsi une image.

**14.** Procédé de formation d'image selon la revendication 13, dans lequel le support d'enregistrement est un support d'enregistrement à faible perméabilité ou un support d'enregistrement sans perméabilité.

**15.** Procédé de formation d'image selon la revendication 13 ou 14, dans lequel l'étape d'application d'agent de traitement est une étape pour appliquer, par un procédé à jet d'encre, la composition d'encre aqueuse selon la revendication 9 sur le support d'enregistrement après l'avoir soumis à l'étape d'application d'agent de traitement, formant ainsi une image.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016069583 A
- US 2016333209 A1
- JP 2007100071 A
- JP 2011178029 A
- JP 10230201 A
- JP H10230201 A
- JP 2003306623 A
- JP 2010221415 A
- WO 2013180074 A


### Non-patent literature cited in the description


- *J. Phys. Chem. A,* 2011, vol. 115, 6641-6645